# EUROPEAN PATENT SPECIFICATION

(11) **EP 4 492 566 B1**
(45) Date of publication and mention of the grant of the patent: **04.11.2026**
(21) Application number: 24724426.2
(22) Date of filing: 09.05.2024
(51) Int. Cl.: H04M 1/02, H01Q 1/24, H01Q 19/10, G06F 1/16, H01Q 21/06, H01Q 5/30, H01Q 15/14, H01Q 1/38

(54) **ELECTRONIC DEVICE INCLUDING ANTENNA**
ELEKTRONISCHE VORRICHTUNG MIT ANTENNE
DISPOSITIF ÉLECTRONIQUE COMPRENANT UNE ANTENNE

(30) Priority: 02.06.2023 KR 20230071815; 20.07.2023 KR 20230094492
(43) Date of publication of application: 15.01.2025
(73) Proprietor: Samsung Electronics Co., Ltd., Suwon-si, Gyeonggi-do 16677 (KR)
(72) Inventor: KIM, Moonyung, Suwon-si Gyeonggi-do 16677 (KR); LEE, Donghyeok, Suwon-si Gyeonggi-do 16677 (KR); JO, Kyunghwan, Suwon-si Gyeonggi-do 16677 (KR); LEE, Soyoung, Suwon-si Gyeonggi-do 16677 (KR); JANG, Seokmin, Suwon-si Gyeonggi-do 16677 (KR)
(74) Representative: Appleyard Lees IP LLP
(86) International application number: PCT/KR2024/006202
(87) International publication number: WO 2024/248353

(56) References cited:
- WO-A1-2006/082918
- WO-A1-2022/065732
- KR-A- 20190 143 029
- KR-A- 20220 051 950
- KR-A- 20220 132 563
- KR-A- 20230 048 913

## Description

### [Technical Field]

Embodiments of the disclosure relate to an electronic device including an antenna.

### [Background Art]

Electronic devices often have a uniform rectangular shape, although some electronic devices have different shapes. Electronic devices may have a variable, or changeable, structure that is convenient to carry, for example when it is in a smaller and more compact configuration, and enables utilization of a large screen display, for example when it is in a larger or expanded configuration. Such electronic devices can have a structure (e.g., rollable structure or slidable structure) that can change the display area of a flexible display (e.g., rollable display or foldable display). The display is supported by housings that slide relative to each other. Patent publication WO2006082918A1 describes a sliding type portable wireless device designed to optimize antenna configuration in accordance with a use status.

The above information may be provided as related art for the purpose of aiding understanding of the disclosure. No claim or determination is made as to whether any of the above description can be applied as prior art to the disclosure.

### [Disclosure]

### [Technical Problem]

Electronic devices may include a rollable electronic device (e.g., slidable electronic device) that can induce expansion and/or reduction of the display area of a flexible display (e.g., rollable display, expandable display, or stretchable display) depending on the operating state. The rollable electronic device may include a first housing (e.g., back cover or first housing structure) and a second housing (e.g., front cover or second housing structure) that are movably coupled to each other. For example, the first housing and the second housing may be configured to slide relative to each other and at least one of the housings may support at least a portion of the flexible display. The flexible display may have a first display area in a slide-in state, and may have a second display area that is larger than the first display area in a slide-out state.

Rollable electronic devices may include at least one antenna module (e.g., antenna structure or antenna) disposed in the internal space. The at least one antenna module may be configured to transmit or receive a radio signal in a designated frequency band (e.g., frequency band ranging from 3 GHz to 300 GHz). The at least one antenna module may be configured to form a directional signal (e.g., directional beam or beam pattern) in a direction from the internal space of the rollable electronic device to the outside. The antenna module may be within a portion of the first housing and/or the second housing made of a conductive part (metal or other conductive material), and may be disposed to form a directional signal in an outward direction through a non-conductive part (polymer or other non-conductive material) coupled with the conductive part.

However, when the antenna module is configured to form a directional signal through the region of the device where the two housings overlap when the device is in the slide-in state, the beam coverage of the antenna module may be reduced. This is because, in the slide-in state, the directional signal must pass through the two housings, i.e., an increased thickness/distance over which the directional signal deteriorates. This is further exacerbated when one or more of the regions of the housings are made of conductive materials, which further increase deterioration.

### [Technical Solution]

There is provided an antenna that provides effective beam coverage of the antenna module in a slide-in state and an electronic device including the same.

In this way, there is also provided an antenna that can facilitate free arrangement design of surrounding electrical components and an electronic device including the antenna.

However, the problems to be solved in the disclosure are not limited to those described above.

According to various embodiments, there is provided an electronic device as set out in accompanying claim 1.

### [Advantageous Effects]

The antenna module according to an exemplary embodiment of the disclosure may be configured so that the direction of the directional signal is changed through a reflector or reflection sheet. In this way, the directional signal can be reflected, i.e., the direction changed, so that a directional signal that would otherwise pass through the region of the overlap of the two housings in the slide-in state of the rollable electronic device, can be directed to pass through a different region of the device, such as a region in which the deterioration of the directional signal is reduced. In this way, beam coverage is improved, and the free arrangement design of the antenna module can facilitate efficient arrangement of surrounding electrical components.

In addition, various effects that are directly or indirectly identified through this document may be provided.

The effects that can be obtained from the disclosure are not limited to those mentioned above, and other effects not mentioned can be clearly understood by those skilled in the art to which this disclosure pertains from the following description.

### [Description of Drawings]

In relation to the description of the drawings, the same or similar reference symbols may be used for the same or similar components. The subject-matter of the present disclosure is best understood with reference to the accompanying figures, in which:
FIG. 1 is a block diagram of an electronic device in a network environment,
FIGS. 2A and 2B are views illustrating the front and back of an electronic device in a slide-in state,
FIGS. 3A and 3B are views illustrating the front and back of the electronic device of FIGS. 2A and 2B in a slide-out state,
FIG. 4 is an exploded perspective view of an electronic device,
FIG. 5A is a cross-sectional view of an electronic device viewed along line 5a-5a in FIG. 2A,
FIG. 5B is a cross-sectional view of an electronic device viewed along line 5b-5b in FIG. 3A,
FIG. 6A is a view of an electronic device in a slide-out state illustrating an arrangement structure of at least one antenna module,
FIG. 6B is a view of an electronic device in a slide-in state illustrating an arrangement structure of at least one antenna module,
FIG. 6C is a configuration view of an antenna module,
FIG. 7A is a partial cross-sectional view of an electronic device viewed along line 7a-7a in FIG. 2A,
FIG. 7B is a schematic view showing the arrangement relationship between the antenna module and the reflection sheet seen from the z-axis direction in FIG. 7A,
FIG. 8 is a perspective view of a first housing,
FIGS. 9A and 9B are graphs comparing antenna modules with and without a reflection sheet in terms of radiation performance ,
FIGS. 10A and 10B are diagrams comparing antenna modules with and without a reflection sheet,
FIG. 11A is a view illustrating an arrangement structure of an antenna module , and
FIG. 11B is a cross-sectional view of an electronic device viewed along line 11b-11b in FIG. 11A.

### [Mode for Disclosure]

Hereinafter, embodiments of the disclosure will be described in detail with reference to the accompanying drawings so that those ordinarily skilled in the art to which the disclosure pertains can easily practice them. However, the disclosure may be implemented in many different forms without being limited to those embodiments described herein. In relation to the description of the drawings, identical or similar reference symbols may be used for the same or similar components. Additionally, in the drawings and related descriptions, descriptions of well-known functions and configurations may be omitted for clarity and brevity.

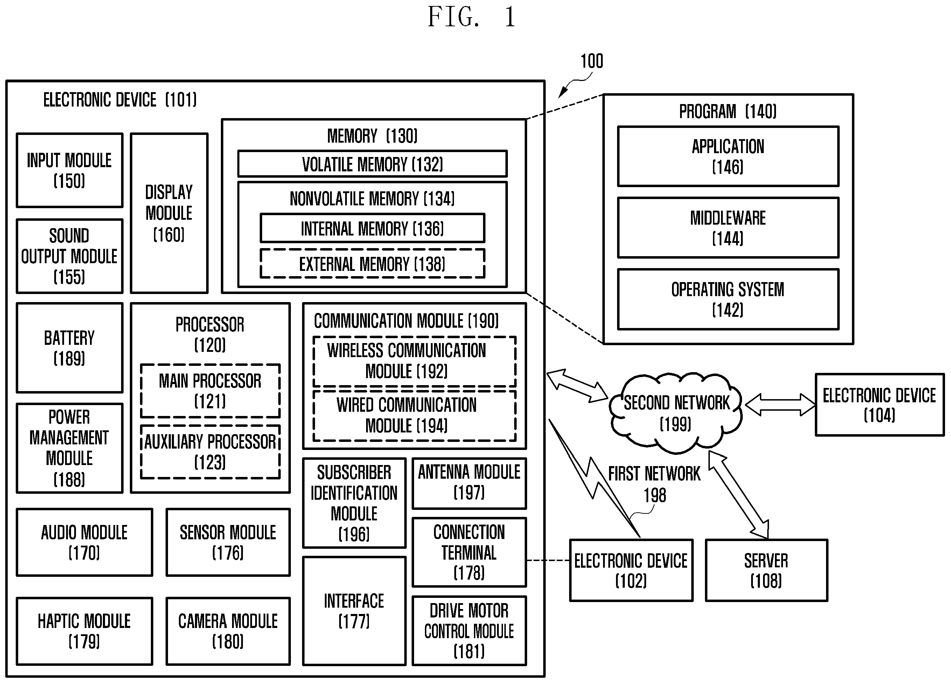

FIG. 1 is a block diagram illustrating an electronic device 101 in a network environment 100 according to various embodiments.

With reference to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, For example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, For example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, For example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic device 102 or 104 may be a device of a same type as, or a different type, from the electronic device 101. According to an embodiment, all or some of operations to be executed at the electronic device 101 may be executed at one or more of the external electronic device 102, 104, or 108. For example, if the electronic device 101 should perform a function or a service automatically, or in response to a request from a user or another device, the electronic device101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or IoT-related technology.

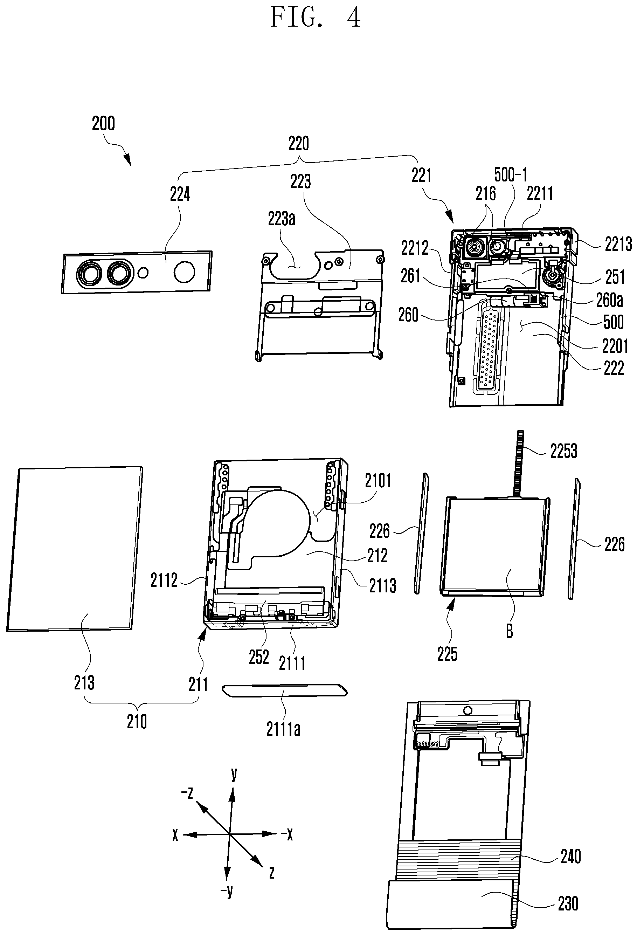

According to various embodiments, the sensor module 176 may include a movement distance detection sensor to detect a movement distance of a second housing (e.g., a second housing 220 in FIG. 4) from a first housing (e.g., a first housing 210 in FIG. 4) of an electronic device (e.g., an electronic device 200 of FIG. 4). In one embodiment, through movement of the second housing 220 from the first housing 210, the sensor module 176 may detect a slide-in state being a first state, a slide-out state being a second state, or an intermediate state being a third state between the slide-in state and the slide-out state. In a certain embodiment, the processor 120 may detect the movement distance in real time through the sensor module 176 while the second housing 220 is moved from the first housing 210, and control the display module 160 to display an object in correspondence to the changing display area through a flexible display (e.g., flexible display 230 in FIG. 4). In one embodiment, the electronic device 101 may include a drive motor control module 181 to control the operation of a drive motor (e.g., DC motor or stepping motor) (e.g., drive motor 260 in FIG. 4) disposed inside the electronic device. In an embodiment, the drive motor control module 181 may be replaced by the processor 120.

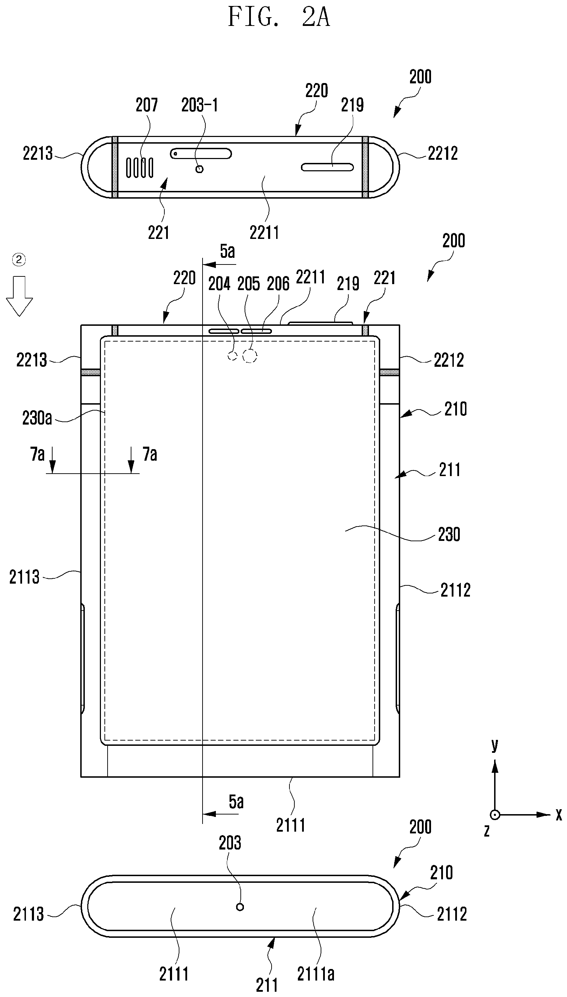

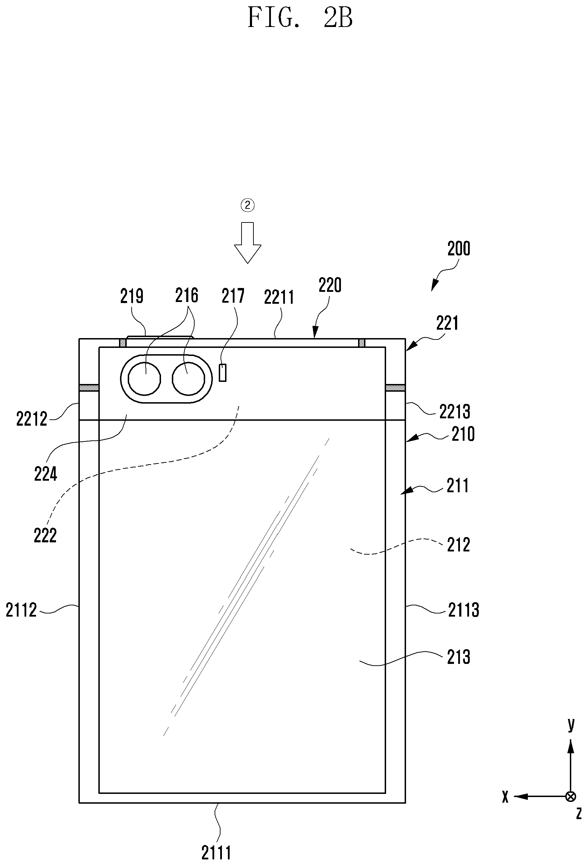

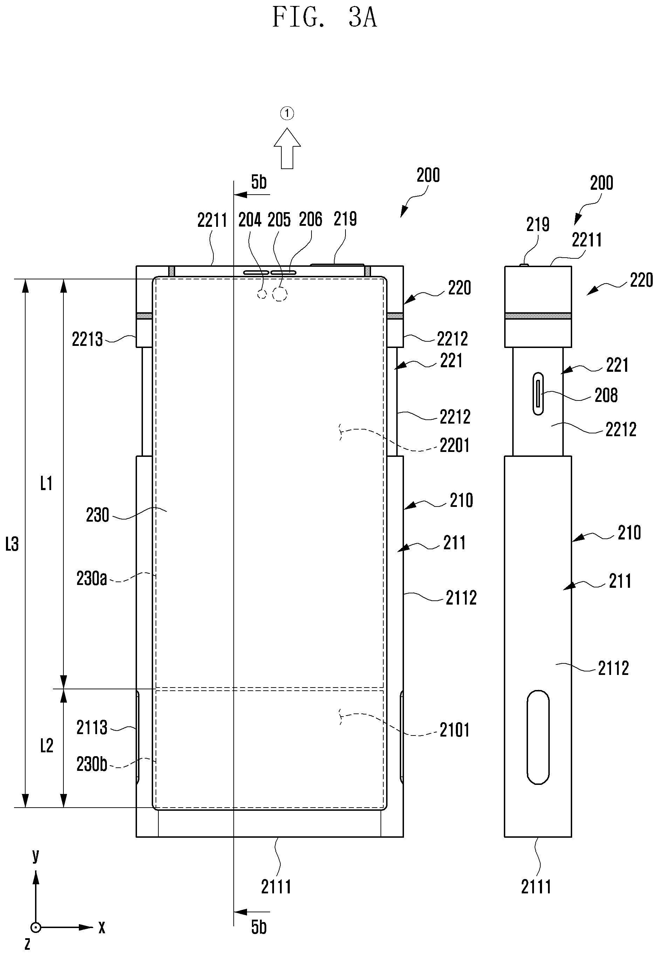

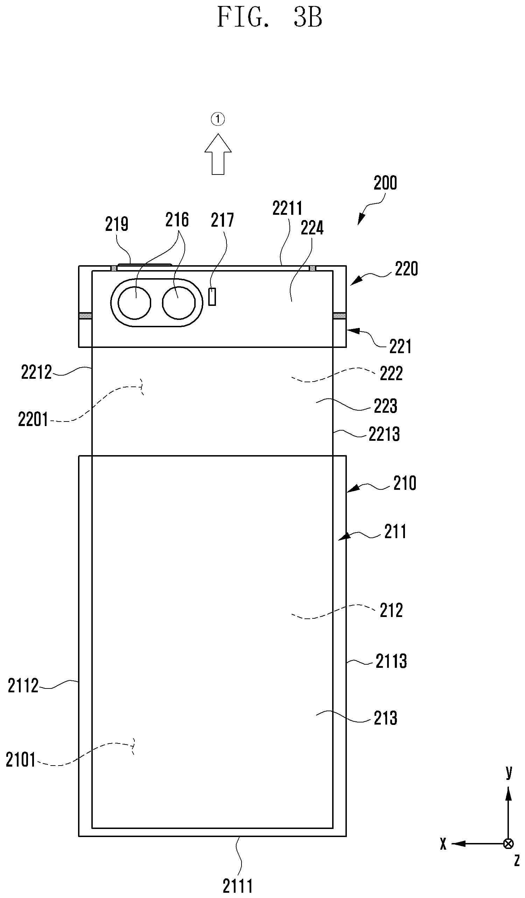

FIGS. 2A and 2B are views illustrating the front and back of an electronic device in a slide-in state according to various embodiments of the disclosure. FIGS. 3A and 3B are views illustrating the front and back of the electronic device in a slide-out state according to various embodiments of the disclosure.

The electronic device 200 of FIGS. 2A to 3B may be at least partially similar to the electronic device 101 in FIG. 1 or may further include other features of an electronic device, such as those included in other embodiments.

With reference to FIGS. 2A to 3B, the electronic device 200 may include a first housing 210 (e.g., back cover or first housing structure), a second housing 220 (e.g., front cover or second housing structure) movably (e.g., slidably) coupled with the first housing 210 in a specified direction (e.g., direction ① or direction ②) (e.g., ± y-axis direction), and a flexible display 230 (e.g., rollable display, expandable display, or stretchable display) disposed to be supported by at least a portion of the first housing 210 and the second housing 220. In one embodiment, the second housing 220 may be slidably coupled to the first housing 210 so that the second housing 220 is slid out in a first direction (direction ① or is slid in a second direction (direction ②) opposite to the first direction (direction ①) with respect to the first housing 210. In one embodiment, the electronic device 200 may be changed to a slide-in state, i.e., a first state, by accommodating at least a portion of the second housing 220 in at least a portion of a first space 2101 formed through the first housing 210. In one embodiment, the electronic device 200 may be changed to a slide-out state, i.e., a second state, by moving at least a portion of the second housing 220 from the first space 2101 in an outward direction (e.g., direction ①). In one embodiment, the electronic device 200 may include a support member (e.g., support member 240 in FIG. 4) (e.g., bendable member, multi-link hinge module, multi bar assembly, or multi bar) that at least partially forms the same plane as at least a portion of the second housing 220 in the slide-out state and is received at least partially in a bending manner into the first space 2101 of the first housing 210 in the slide-in state. In one embodiment, at least a portion of the flexible display 230 may be supported by at least a portion of the second housing 220 and, at least a portion of the remaining part of the flexible display 230 may be supported by the support member 240 (e.g., support member 240 in FIG. 4). In one embodiment, the support member 240 may be attached to the back of the flexible display 230. In the intermediate state, a portion of the flexible display 230 may be arranged to be hidden or out of view from the outside of the electronic device by being received in a bending manner in the first space 2101 of the first housing 210 while being supported by the support member (e.g., support member 240 in FIG. 4). In the intermediate state, a portion of the flexible display 230 may be visible from the outside of the electronic device while being supported by the support member (e.g., support member 240 in FIG. 4) forming at least partially the same plane as the second housing 220. In the slide-in state, the flexible display 230 may be arranged to be hidden or out of view from the outside of the electronic device by being received in a bending manner in the first space 2101 of the first housing 210 while being supported by the support member (e.g., support member 240 in FIG. 4). In the slide-in state, the flexible display 230 may be visible from the outside of the electronic device while being supported by the support member (e.g., support member 240 in FIG. 4) forming at least partially the same plane as the second housing 220.

According to various embodiments, the first housing 210 may include a first lateral member 211, and the second housing 220 may include a second lateral member 221. In one embodiment, the first lateral member 211 may include a first side surface 2111 that is disposed in the lower part of the electronic device 200 to have a first length, a second side surface 2112 that is extended in a vertical direction (e.g., y-axis direction) from one end of the first side surface 2111 to have a second length, and a third side surface 2113 that is extended parallel to the second side surface 2112 from the other end of the first side surface 2111 to have the second length. In one embodiment, the first lateral member 211 may be at least partially made of a conductive material (e.g., metal). For example, the first lateral member 211 may be made of a combination of a conductive material and a non-conductive material (e.g., polymer). In one embodiment, the first housing 210 may include a first extension member 212 extended from at least a portion of the first lateral member 211 to at least a portion of the first space 2101. In one embodiment, the first extension member 212 may be formed integrally with the first lateral member 211. In an embodiment, the first extension member 212 may be formed separately from the first lateral member 211 and may be structurally coupled to the first lateral member 211.

According to various embodiments, the second lateral member 221 may include a fourth side surface 2211 that is disposed in the upper part of the electronic device 200 to have a third length, a fifth side surface 2212 that is extended from one end of the fourth side surface 2211 in a vertical direction (e.g., negative y-axis direction) in correspondence to the second side surface 2112 to have a fourth length, and a sixth side surface 2213 that is extended from the other end of the fourth side surface 2211 in a direction parallel to the fifth side surface 2212 in correspondence to the third side surface 2113 to have the fourth length. In one embodiment, the second lateral member 221 may be at least partially made of a conductive material (e.g., metal). For example, the second lateral member 221 may be made of a combination of a conductive material and a non-conductive material (e.g., polymer). In one embodiment, at least a portion of the second lateral member 221 may include a second extension member 222 extended to at least a portion of the second space 2201 of the second housing 220. In one embodiment, the second extension member 222 may be formed integrally with the second lateral member 221. In an embodiment, the second extension member 222 may be formed separately from the second lateral member 221 and may be structurally coupled to the second lateral member 221.

According to various embodiments, the second side surface 2112 and the fifth side surface 2212 may be slidably coupled to each other. In one embodiment, the third side surface 2113 and the sixth side surface 2213 may be slidably coupled to each other. In the intermediate state, a portion of the fifth side surface 2212 may be substantially hidden or out of view from the outside of the electronic device by being overlapped by the second side surface 2112 and, the remaining portion of the fifth side surface 2212 may be visible from the outside of the electronic device. In the slide-in state, the fifth side surface 2212 may be substantially hidden or out of view from the outside of the electronic device by being overlapped by the second side surface 2112. In the intermediate state, a portion of the sixth side surface 2213 may be substantially hidden or out of view from the outside by being overlapped by the third side surface 2113 and, the remaining portion of the sixth side surface 2213 may be visible from the outside of the electronic device. In the slide-in state, the sixth side surface 2213 may be substantially hidden or out of view from the outside of the electronic device by being overlapped by the third side surface 2113. In the intermediate state, a portion of the second extension member 222 may be visible from the outside of the electronic device. In the slide-in state, the second extension member 222 may be substantially invisible from the outside of the electronic device by being overlapped by the first extension member 212.

According to various embodiments, the first housing 210 may include a first rear cover 213 coupled to at least a portion of the first lateral member 211. In one embodiment, the first rear cover 213 may be coupled to at least a portion of the first extension member 212. In an embodiment, the first rear cover 213 may be formed integrally with the first lateral member 211. In one embodiment, the first rear cover 213 may be made of a polymer, coated or colored glass, ceramic, metal (e.g., aluminum, stainless steel (STS), or magnesium), or a combination of at least two of these materials. In an embodiment, the first rear cover 213 may extend to at least a portion of the first lateral member 211. In an embodiment, the first rear cover 213 may be omitted, and at least a portion of the first extension member 212 may replace the first rear cover 213.

According to various embodiments, the second housing 220 may include a second rear cover 223 coupled to at least a portion of the second lateral member 221. In one embodiment, the second rear cover 223 may be coupled to at least a portion of the second extension member 222. In one embodiment, the second rear cover 223 may be formed integrally with the second lateral member 221. In one embodiment, the second rear cover 223 may be made of a polymer, coated or colored glass, ceramic, metal (e.g., aluminum, stainless steel (STS), or magnesium), or a combination of at least two of these materials. In an embodiment, the second rear cover 223 may extend to at least a portion of the second lateral member 221. In an embodiment, the second rear cover 223 may be omitted, and at least a portion of the second extension member 222 may replace the second rear cover 223. In an embodiment, the second extension member 222 may be omitted, and the second rear cover 223 may replace the second extension member 222. In one embodiment, the second housing 220 may include a window cover 224 disposed in at least a portion of the second rear cover. In one embodiment, the window cover 224 may be disposed in a region exposed to the outside of the second housing 220 in the slide-in state, and may be made of a material that facilitates detection of the external environment through at least one camera module 216 and/or sensor module 217 arranged in the internal space 2201 of the second housing 220. For example, the window cover 224 may be made of glass and/or a polymer material, and at least a region overlaying the camera module 216 and/or sensor module 217 is transparent. In an embodiment, the electronic device 200 may further include a cover member 2111a arranged to cover at least a portion of the first side surface 2111 of the first housing 210.

According to various embodiments, the flexible display 230 may include a first part 230a (e.g., flat part) that is visible from the outside in the slide-in, slide-out and intermediate states, and a second part 230b (e.g., bendable part or bending part) that is extendable from the first part 230a. When the second part 230b is received in the first space 2101 of the first housing 210, it is at least partially bent so as to be hidden from the outside, e.g., in the slide-in state or the intermediate state. In one embodiment, at least a portion of the first part 230a may be supported by the second housing 220, and at least a portion of the first part 230a and the second part 230b may be at least partially supported by the support member (e.g., support member 240 in FIG. 4). In one embodiment, the second part 230b of the flexible display 230 may form substantially the same plane as the first part 230a when it is supported by the support member (e.g., support member 240 in FIG. 4) in the slide-out or intermediate state, and may be visible from the outside of the electronic device. In one embodiment, the second part 230b of the flexible display 230 may be bent and received in the first space 2101 of the first housing 210 in the slide-in state, and may be hidden from the outside. Hence, the total display area of the flexible display 230 may vary as the second housing 220 is moved in a sliding manner along a specified direction (e.g., ±y-axis direction) from the first housing 210.

According to various embodiments, the length of the flexible display 230 in the sliding direction (e.g., direction ① and/or direction ②) may vary depending on the sliding movement of the second housing 220 relative to the first housing 210. For example, in the slide-in state, the flexible display 230 may have a first display area corresponding to the first length L1 (FIG. 3A) (e.g., area corresponding to the first part 230a). In one embodiment, in the slide-out state, the flexible display 230 may be expanded to have a second display area that corresponds to the third length L3 (e.g., area including the first part 230a and the second part 230b), which is longer than the first length L1 and is larger than the first display area. The third length L3 is longer that the first length L1 by the movement distance of the second housing 220, i.e., the second length L2.

According to various embodiments, the electronic device 200 may include at least one input device (e.g., microphone 203-1), sound output device (e.g., call receiver 206 and/or speaker 207), sensor module 204 and/or 217, camera module (e.g., first camera module 205 or second camera module 216), connector port 208, key input device 219, or indicator (not shown), which are arranged in the second space 2201 of the second housing 220. In one embodiment, the electronic device 200 may include an input device (e.g., microphone 203) disposed in the first housing 210. In an embodiment, the electronic device 200 may omit at least one of the above-described components or to additionally include other components. In an embodiment, at least one of the above-described components may be disposed in the first space 2101 of the first housing 210.

According to various embodiments, the input device may include a microphone 203-1. In an embodiment, the input device (e.g., microphone 203-1) may include a plurality of microphones arranged to detect the direction of a sound. According to various embodiments, the sound output device may include, for example, a call receiver 206 and a speaker 207. In one embodiment, the second housing 220 may include at least one speaker hole for the speaker 207 at a position always exposed to the outside (e.g., in the fourth side surface 2211) regardless of the slide-in/slide-out state. In one embodiment, the second housing 220 may include a connector port hole for the connector port 208 at a position exposed to the outside in the slide-out state. In one embodiment, the connector port 208 may be hidden from view from the outside in the slide-in state. In an embodiment, the first housing 210 may include an opening for the connector port 208 at a position corresponding to the connector port hole in the slide-in state. In an embodiment, the call receiver 206 may include a speaker (e.g., piezo speaker) that operates without a separate speaker hole.

According to various embodiments, the sensor modules 204 and 217 may generate an electrical signal or data value corresponding to an internal operating state of the electronic device 200 or an external environmental state. In one embodiment, the sensor modules 204 and 217 may include, for example, a first sensor module 204 (e.g., proximity sensor or illumination sensor) disposed on the front of the electronic device 200 and/or a second sensor module 217 (e.g., heart rate monitoring (HRM) sensor) disposed on the back of the electronic device 200. In one embodiment, the first sensor module 204 may be disposed under the flexible display 230 on the front of the electronic device 200. In one embodiment, the first sensor module 204 and/or the second sensor module 217 may include at least one of proximity sensor, illuminance sensor, time-of-flight (TOF) sensor, ultrasonic sensor, fingerprint recognition sensor, gesture sensor, gyro sensor, barometric pressure sensor, magnetic sensor, acceleration sensor, grip sensor, color sensor, infrared (IR) sensor, biometric sensor, temperature sensor, or humidity sensor.

According to various embodiments, the camera module may include a first camera module 205 disposed on the front of the electronic device 200 and a second camera module 216 disposed on the back of the electronic device 200. In one embodiment, the electronic device 200 may include a flash (not shown) positioned near the second camera module 216. In one embodiment, the camera modules 205 and 216 may include one or multiple lenses, an image sensor, and/or an image signal processor. In one embodiment, the first camera module 205 may be disposed under the flexible display 230 and may be configured to photograph a subject through a portion of the active area (e.g., display area) of the flexible display 230.

According to various embodiments, the first camera module 205 and the first sensor module 204 may be arranged to detect an external environment through the flexible display 230. For example, the first camera module 205 or the first sensor module 204 may be arranged in the second space 2201 of the second housing 220 so as to come into contact with the external environment through a transmissive region or perforated opening formed in the flexible display 230. In one embodiment, the region facing the first camera module 205 of the flexible display 230 may be formed as a transmissive region with a specified transmittance, and be a part of the active area that displays content. In one embodiment, the transmissive region may be formed to have a transmittance ranging from about 5% to about 20%. This transmissive region may include a region overlapping with the effective area (e.g., field-of-view area) of the first camera module 205 through which light passes to create an image by being imaged by an image sensor. For example, the transmissive region of the flexible display 230 may include a region where the pixel arrangement density and/or wiring density is lower than surrounding regions. For example, the transmissive region may be replaced by the perforated opening described above. For example, some camera modules 205 may include an under-display camera (UDC). In an embodiment, some sensor modules 204 may be arranged in the second space 2201 of the second housing 220 so as to perform their functions without being visually exposed through the flexible display 230.

According to various embodiments, slide-in and/or slide-out operations of the electronic device 200 may be performed automatically. For example, the slide-in and/or slide-out operations of the electronic device 200 may be performed through gear engagement between a drive motor (e.g., drive motor 260 in FIG. 4) including a pinion gear (e.g., pinion gear 261 in FIG. 4) disposed in the second space 2201 of the second housing 220 and a rack (e.g., rack 2253 in FIG. 4) that is disposed in the first space 2101 of the first housing 210. The rack may extend to at least a portion of the second space 2201, and may include a rack gear engaged with the pinion gear 261. For example, when the processor (e.g., processor 120 in FIG. 1) of the electronic device 200 detects a triggering signal for transitioning from the slide-in state to the slide-out state or transitioning from the slide-out state to the slide-in state, it may drive the drive motor (e.g., drive motor 260 in FIG. 4) disposed inside the electronic device 200 to cause the associated movement of the first housing and/or second housing. In one embodiment, the triggering signal may include a signal caused by selection (e.g., touch) of an object displayed on the flexible display 230 or by manipulation (e.g., pressurization) of a physical button (e.g., key button) included in the electronic device 200.

According to various embodiments, the electronic device 200 has a structure in which the second housing 220 is slid in and/or slid out relative to the first housing 210 along the longitudinal direction (e.g., vertical direction, ±y-axis direction) of the electronic device 200, but it is not limited thereto. For example, the electronic device 200 may have a structure in which the second housing 220 is slid in and/or slid out relative to the first housing 210 along the width direction (e.g., horizontal direction, ±x-axis direction) perpendicular to the length direction of the electronic device 200. In an embodiment, the length of the first side surface 2111 of the first housing 210 may be longer than that of the second side surface 2112. In such a case, the length of the fourth side surface 2211 of the second housing 220 may also be longer than that of the fifth side surface 2212 accordingly.

FIG. 4 is an exploded perspective view of the electronic device according to various embodiments of the disclosure.

In describing the electronic device 200 of FIG. 4, components that are substantially the same as those of the electronic device 200 of FIGS. 2A to 3B are given the same reference symbols, and detailed descriptions thereof may be omitted.

With reference to FIG. 4, the electronic device 200 may include a first housing 210 including a first space 2101, a second housing 220 that is slidably coupled to the first housing 210 and includes a second space 2201, a support member 240 (e.g., bendable member or multi-bar assembly) that is fixed to at least a portion of the second housing 220 and is at least partially bendably received in the first space 2101 in the slide-in state, a flexible display 230 supported by at least a portion of the support member 240 and the second housing 220, and a drive module (e.g., driving mechanism) that is configured to drive the second housing 220 relative to the first housing 210 in a slide-in direction (e.g., negative y-axis direction) and/or a slide-out direction (e.g., y-axis direction). In one embodiment, the first housing 210 may include a first lateral member 211, and a first rear cover 213 coupled with at least a portion of the first lateral member 211 (e.g., at least a portion of the first extension member 212). In one embodiment, the first space 2101 may be at least partially defined by the first lateral member 211 and the first rear cover 213. In one embodiment, the second housing 220 may include a second lateral member 221, a second rear cover 223 coupled with at least a portion of the second lateral member 221 (e.g., at least a portion of the second extension member 222), and a window cover 224 coupled with the second rear cover 223. In one embodiment, the second space 2201 may be at least partially defined by the second lateral member 221, the second rear cover 223, and the window cover 224. In one embodiment, a portion of the second rear cover 223 may include a notch region 223a configured to expose the second camera module 216 disposed in the second space 2201. In one embodiment, the notch region 223a may be protected from the outside through the window cover 224 disposed thereover. In one embodiment, the first housing 210 may further include a cover member 2111a disposed to cover at least a portion of the first side surface 2111.

According to various embodiments, the drive module may include a drive motor 260 in the second space 2201 and the drive motor 260 may include a pinion gear 261, and a rack gear 2253 that is fixed to a support bracket 225, extends from the first space 2101 to the second space 2201, and engages with the pinion gear 261. In one embodiment, the electronic device 200 may further include a deceleration module (e.g., deceleration gear assembly) that is configured to reduce the rotational speed and decrease the driving force of the drive motor 260 by being coupled to the drive motor 260. In one embodiment, the drive motor 260 may be supported by the second extension member 222 in the second space 2201 of the second housing 220. In one embodiment, the drive motor 260 may be supported through a motor bracket 260a fixed to the second extension member 222. In an embodiment, the motor bracket 260a may further include a guide structure that guides the rack gear 2253 in the sliding direction. Therefore, the pinion gear 261 may engage with the rack gear 2253 regardless of the slide-in/slide-out state of the electronic device when the pinion gear 261 receives a driving force from the drive motor 260, the pinion gear 261 moves on the rack gear 2253, so that the second housing 220 moves relative to the first housing 210.

According to various embodiments, the electronic device 200 may include a support bracket 225 fixed to the first space 2101 of the first housing 210. In one embodiment, the electronic device 200 may include a pair of guide rails 226 that are fixed to both sides of the support bracket 225 to guide both ends of the support member 240 in the sliding direction and at the same time guide the second housing 220 in the sliding direction. In one embodiment, the support bracket 225 and the guide rails 226 may be fixed in the internal space 2101 of the first housing 210 through a fastening member such as a screw.

According to various embodiments, the electronic device 200 may include at least one electrical component disposed in the second space 2201. In one embodiment, the at least one electrical component may include a board assembly 251 (e.g., main board) (e.g., stacked boards or main PCB), and a second camera module 216 disposed around the board assembly 251. In a certain embodiment, at least one electrical component may be disposed in the first space 2101 of the first housing 210.

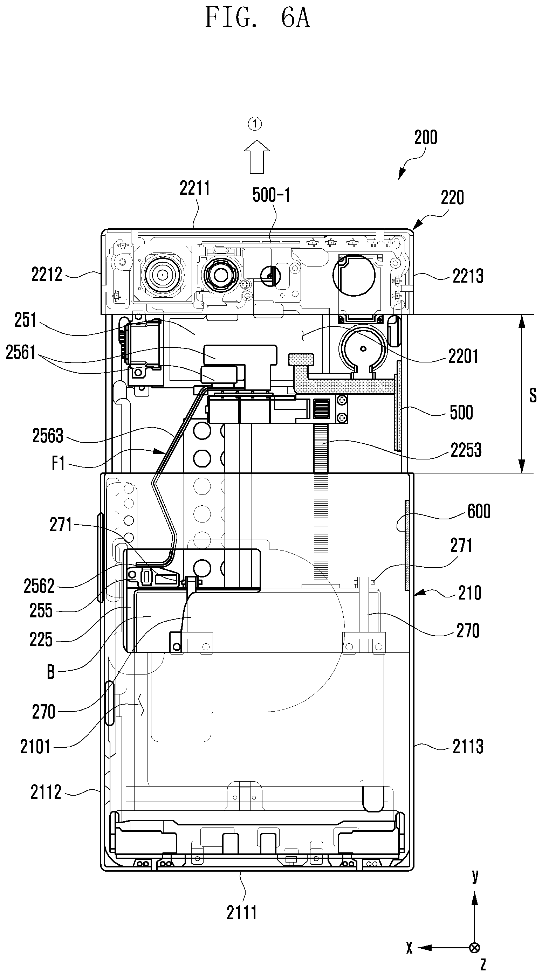

According to various embodiments, the electronic device 200 may include a first board 252 (e.g., first sub-board) disposed in the first housing 210 between the first extension member 212 and the first rear cover 213. In one embodiment, the first board 252 may be electrically connected to the board assembly 251 through a flexible board (e.g., flexible board F1 in FIG. 6A) (e.g., flexible printed circuit board (FPCB) or flexible RF cable (FRC)).

According to various embodiments, the electronic device 200 may include at least one antenna module 500, 500-1. In one embodiment, the at least one antenna module 500, 500-1 may be disposed in the first space 2101. In one embodiment, the at least one antenna module 500, 500-1 may include a first antenna module 500 that is disposed in the second space 2201 to form a directional signal through the sixth side surface 2213 of the second housing 220, and a second antenna module 500-1 that is disposed in the second space 2201 to form a directional signal through the fourth side surface 2211. In one embodiment, the first antenna module 500 and the second antenna module 500-1 may have substantially the same configuration. In one embodiment, the first antenna module 500 and/or the second antenna module 500-1 may be configured to transmit or receive a radio signal of a frequency band ranging from about 3 GHz to about 300 GHz.

According to various embodiments, the first antenna module 500 may be in the second space 2201 of the second housing 220 and may be configured to form a directional signal which is transmitted to the outside of the electronic device through the sixth side surface 2213 of the second housing 220 when the device is in the slide-out state. In one embodiment, the first antenna module 500 may be configured to form a directional signal which is transmitted to the outside of the device through the sixth side surface 2213 and the third side surface 2113 when the device is in the slide-in state by being placed at a position overlapping with the third side surface 2113 of the first housing 210 in the slide-in state. In an embodiment, the first antenna module 500 may be configured to form a directional signal through the sixth side surface 2213 and the third side surface 2113 even in the slide-out state by being placed at a position within the second space 2201 of the second housing 220 that always overlaps with the third side surface 2113 of the first housing 210, regardless of the slide-in/slide-out state of the electronic device. In one embodiment, the electronic device 200 may include a reflection sheet 600 disposed in the first space 2101 that is configured to change the direction of the directional signal from the first antenna module 500 in the slide-in state. In a certain embodiment, the reflection sheet 600 may be disposed in the second space 2201. In one embodiment, the directional signal formed from the first antenna module 500 is tilted in a direction opposite to the flexible display 230 (i.e., negative z-axis direction) by reflecting from the reflection sheet 600, thus directing the directional signal towards a region of the electronic device through which deterioration of the signal is reduced, which facilitates improved beam coverage.

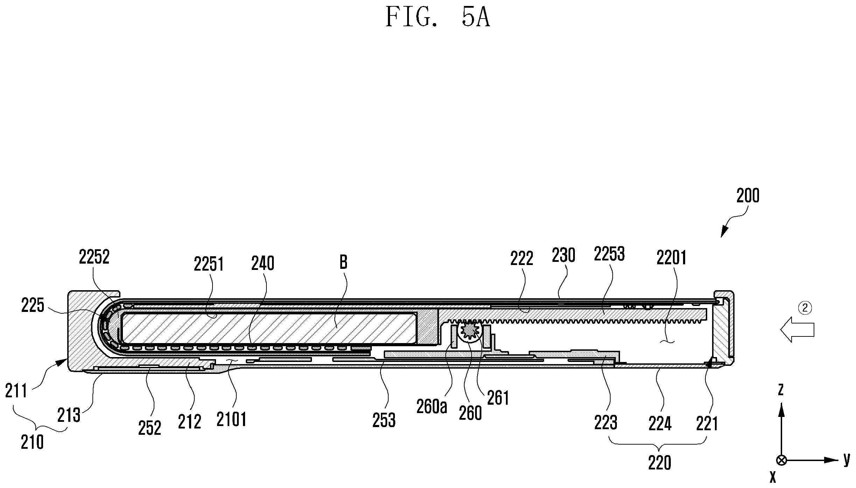

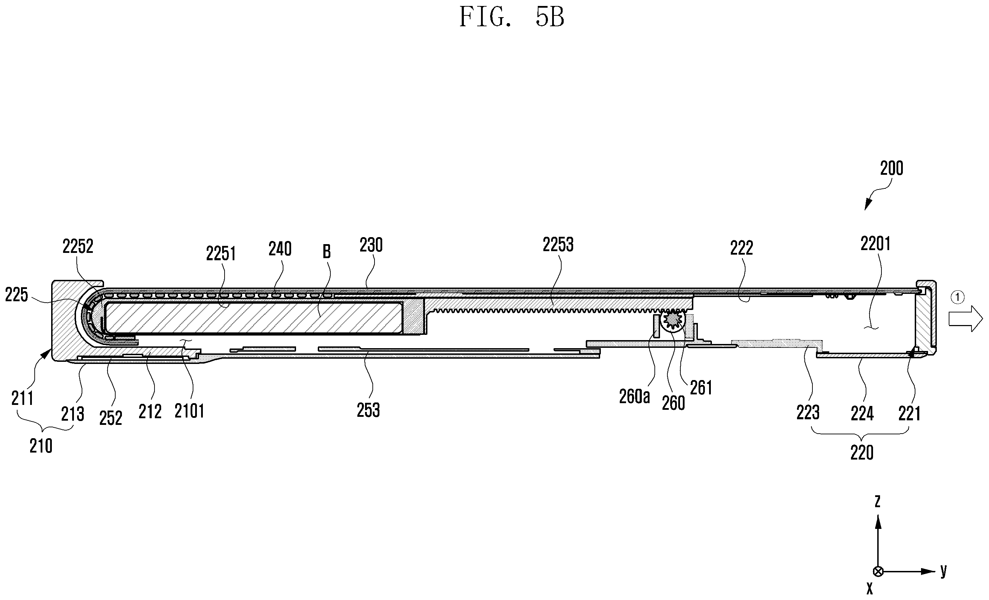

FIG. 5A is a cross-sectional view of the electronic device along line 5a-5a in FIG. 2A according to various embodiments of the disclosure. FIG. 5B is a cross-sectional view of the electronic device along line 5b-5b in FIG. 3A according to various embodiments of the disclosure.

In describing the electronic device 200 of FIGS. 5A and 5B, components that are substantially the same as those of the electronic device 200 in FIG. 4 are given the same reference symbols, and detailed descriptions thereof may be omitted.

With reference to FIGS. 5A and 5B, the electronic device 200 may include a first housing 210 having a first space 2101, a second housing 220 having a second space 2201, a support member 240 that is connected to the second housing 220 and is at least partially accommodated in the first space 2101 in the slide-in state, a flexible display 230 supported by at least a portion of the support member 240 and at least a portion of the second housing 220, and a drive motor 260 including a pinion gear 261 engaged with a rack gear 2253 that is fixed with respect to the first space 2101 and extends to the second space 2201. In one embodiment, through gear engagement between the pinion gear 261 and the rack gear 2253, the drive motor 260 may automatically move the second housing 220 in a slide-out direction (direction ①) or a slide-in direction (direction ②) relative to the first housing 210. In one embodiment, the electronic device 200 may include a first rear cover 213 coupled to a first extension member 212 that extends from the first lateral member 211 of the first housing 210. In one embodiment, the electronic device 200 may include a first board 252 and an antenna member 253 disposed in a space between the first extension member 212 and the first rear cover 213. In one embodiment, the antenna member 253 may be disposed between the first extension member 212 and the first rear cover 213. In one embodiment, the first board 252 and the antenna member 253 may be electrically connected to the board assembly 251 through a flexible board (e.g., flexible board F1 in FIG. 6A). In one embodiment, the antenna member 253 may include a multi-function coil or multi-function core (MFC) antenna to perform a wireless charging function, a near field communication (NFC) function, and/or an electronic payment function. In one embodiment, the electronic device 200 may include a second rear cover 223 coupled to the second extension member 222 extending from the second lateral member 221, and a window cover 224 coupled to a portion of the second rear cover 223.

According to various embodiments, a portion of the second housing 220 may be accommodated in the first space 2101 of the first housing 210 in the slide-in state (state of FIG. 5A) of the electronic device 200. In one embodiment, at least a portion of the flexible display 230 can be accommodated in a bending manner in the first space 2101 together with the support member 240, so that it can be hidden from the outside. In this state, a first display area (e.g., display area corresponding to the first part 230a in FIG. 3A) of the flexible display 230 may be exposed to the outside.

According to various embodiments, in the slide-in state, at least a portion of the second housing 220 may be at least partially moved by the driving of the drive motor 260 from the first housing 210 toward the outside along a first direction (direction ①), allowing the device to transition to the slide-out state. In one embodiment, in the intermediate state of the electronic device 200, the flexible display 230 may be moved together with the support member 240 while being supported by the support bracket 225, so that the portion that is hidden in the slide-in state may be at least partially exposed to be visible from the outside. In this case, the flexible display 230 may expose a second display area that is larger than the first display area to the outside (e.g., display area including the first part 230a and at least a portion of the second part 230b in FIG. 3A).

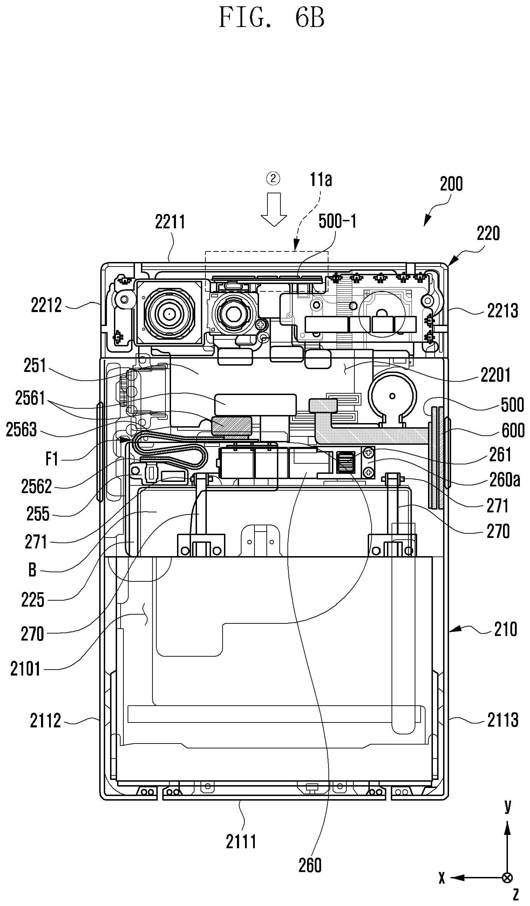

FIG. 6A is a view of the electronic device in the slide-out state for illustrating an arrangement and/or structure of at least one antenna module according to various embodiments of the disclosure. FIG. 6B is a view of the electronic device in the slide-in state for illustrating an arrangement and/or structure of at least one antenna module according to various embodiments of the disclosure.

In describing the electronic device 200 of FIGS. 6A and 6B, components that are substantially the same as those of the electronic device 200 of FIG. 4 are assigned the same reference symbols, and detailed descriptions thereof may be omitted.

With reference to FIGS. 6A and 6B, the electronic device 200 may include a first housing 210 defining a first space 2101, and a second housing 220 that is slidably coupled to the first housing 210 and defines a second space 2201. In one embodiment, the second housing 220 may be arranged to slide out along a first direction (direction ①) (e.g., y-axis direction) or slide in along a second direction (direction ②) (e.g., negative y-axis direction) with respect to the first housing 210. In one embodiment, the electronic device 200 may include a drive motor 260 including a pinion gear 261 disposed on the support bracket 225 of the first housing 210, and a rack gear 2553 disposed in the second housing and engaged with the pinion gear 261. In one embodiment, when the pinion gear 261 rotates due to the driving of the drive motor 260, the rack gear 2253 coupled thereto is moved, so that slide-in/slide-out operations of the second housing 220 can be carried out.

According to various embodiments, the electronic device 200 may include a flexible board F1 to electrically connect a board assembly 251 disposed in the second space 2201 of the second housing 220 and a second board 255 (e.g., sub PCB) disposed in the first space 2101 of the first housing 210. In one embodiment, the second board 255 may be fixed in the first space 2101 through the support bracket 225, and may be electrically connected to the first board 252 and/or the antenna member (e.g., antenna member 253 in FIG. 5A). Hence, the first board 252 and the antenna member 253 may be electrically connected to the board assembly 251 through the second board 255 and the flexible board F1. In one embodiment, the second board 255 may be disposed around the drive motor 260 and may include a charging integrated circuit (IC) for a battery B and/or a control circuit for the drive motor. In one embodiment, the flexible board F1 may be arranged to have a length or shape that can accommodate the sliding distance S of the electronic device 200. In one embodiment, the flexible board F1 may be formed of a material or shape having elasticity that expands into the slide-out state and returns to its original position in the slide-in state. In one embodiment, the flexible board F1 may include a first connector part 2561 to be electrically connected to the board assembly 251, a second connector part 2562 to be electrically connected to the second board 255, and a connection part 2563 that is formed to connect the first connector part 2561 and the second connector part 2562 and enable shape restoration from a stretched or expanded state to its original state. In one embodiment, the flexible board F1 may include a flexible printed circuit board (FPCB) or a flexible RF cable (FRC).

According to various embodiments, the electronic device 200 may include at least one drive belt 270 (e.g., life belt or tension belt) to support the flexible display 230 and reduce the deformation or lifting of the flexible display 230 by providing uniform tension during operation. In one embodiment, the drive belt 270 may help reduce driving resistance due to the eccentricity of the second housing 220, which is moved by the driving of the drive motor 260. In one embodiment, the at least one drive belt 270 may be arranged in pairs, one on each side of the rack gear 2253, which can assist in the smooth operation of the flexible display 230 in a balanced manner. In one embodiment, one end of the drive belt 270 may be fixed to an end portion of the support member 240, and the other end may be fixed to at least a portion of the second extension member 222 of the second housing 220. In one embodiment, the drive belt 270 may be wound around at least one rotating roller 271 rotatably disposed on the support bracket 225.

According to various embodiments, the electronic device 200 may include at least one antenna module 500, 500-1 disposed in the second space 2201 of the second housing 220. In one embodiment, the at least one antenna module 500, 500-1 may include a first antenna module 500 that is disposed in the second space 2201 so as to form a directional signal through the sixth side surface 2213 of the second housing 220 in the slide-out state, and form a directional signal through the sixth side surface 2213 and the third side surface 2113 of the first housing 210 in the slide-in state. In one embodiment, the electronic device 200 may include a second antenna module 500-1 that is disposed in the second space 2201 of the second housing 220 so as to form a directional signal through the fourth side surface 2211 of the second housing 220.

In one embodiment, the electronic device 200 may include a reflection sheet 600 disposed in the first space to change the direction of a directional signal formed by the first antenna module 500 in the slide-in state. In one embodiment, the reflection sheet 600 may be disposed on or near the third side surface 2113 in the first space 2101 of the first housing 210. In one embodiment, the directional signal formed by the first antenna module 500 may be formed in a direction different from the direction in which the sixth side surface 2213 faces (e.g., negative x-axis direction) through the reflection sheet 600. For example, the different direction may include a direction between the direction in which the sixth side surface 2213 faces and the direction in which the second rear cover (e.g., second rear cover 223 in FIG. 4) faces (i.e., a direction between the negative x-axis and the negative z-axis), or the direction in which the second rear cover (e.g., second rear cover 223 in FIG. 4) faces (i.e., negative z-axis direction). The reflection sheet 600 may be disposed at various positions that can change the direction of a directional signal of the first antenna module 500 when the electronic device 200 is in the slide-in state. For example, in the slide-in state, the first antenna module 500 may experience beam coverage reduction as radiation characteristics deteriorate owing to an increase in the thickness of the housings 210 and 220 caused by the overlapping arrangement of the two housings 210 and 220 made of conductive members. In some embodiments, the reflection sheet 600 may be disposed in the second space 2201 of the second housing 220. The electronic device 200 may include a reflection sheet 600 which is configured to change the radiation direction of a directional signal formed by the first antenna module 500 to the direction opposite to the flexible display 230 in the slide-in state, which can help the first antenna module 500 in improving beam coverage regardless of the slide-in/slide-out state. In an embodiment, the first antenna module 500 may be configured to form a directional signal in the second space 2201 in a direction in which the fifth side surface 2212 faces (e.g., x-axis direction). In this case, the reflection sheet 600 may be disposed in the first space 2101 on or near the second side surface 2112 of the first housing 210 overlapping with the fifth side surface 2212. In one embodiment, the reflection sheet 600 may include a metal sheet or conductive tape made of a material such as silver, copper, or aluminum.

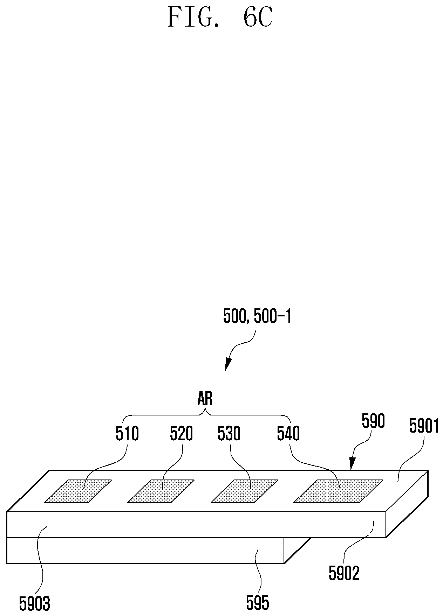

FIG. 6C is a configuration view of an antenna module according to various embodiments of the disclosure.

In describing FIG. 6C, the first antenna module 500 and the second antenna module 500-1 may have substantially the same configuration, and will be described together as the "antenna module 500" in the following description.

With reference to FIG. 6C, the antenna module 500 (e.g., antenna structure or antenna) may include a substrate 590 (e.g., printed circuit board), and a plurality of antenna elements 510, 520, 530 and 540 arranged on the substrate 590 as an array antenna AR. In one embodiment, the substrate 590 may include a first substrate surface 5901, a second substrate surface 5902 facing in a direction opposite to the first substrate surface 5901, and a substrate side surface 5903 surrounding the space between the first substrate surface 5901 and the second substrate surface 5902. In one embodiment, the plurality of antenna elements 510, 520, 530 and 540 may be disposed on or next to the first substrate surface 5901 or may be disposed close to the first substrate surface 5901 between the first substrate surface 5901 and the second substrate surface 5902, and may form a directional signal (e.g., directional beam or beam pattern) in a direction in which the first substrate surface 5901 faces. Hence, the first substrate surface 5901 may be the radiation surface of the antenna module 500. In one embodiment, the plurality of antenna elements 510, 520, 530 and 540 may include a plurality of conductive patches and/or a plurality of conductive patterns.

According to various embodiments, the antenna module 500 may include a wireless communication circuit 595 (e.g., wireless communication module 192 in FIG. 1) disposed on the second substrate surface 5902 of the substrate 590 and electrically connected to the plurality of antenna elements 510, 520, 530 and 540. In one embodiment, the wireless communication circuit 595 may be configured to transmit and/or receive radio signals in a frequency band ranging from about 3 GHz to about 300 GHz through the array antenna AR. In an embodiment, the wireless communication circuit 595 may be disposed on the board assembly (e.g., board assembly 251 in FIG. 6A) and spaced apart from the substrate 590 in the internal space (e.g., second space 2201 in FIG. 6A) of the second housing 220 of the electronic device (e.g., electronic device 200 in FIG. 6A), and may be electrically connected to the substrate 590 through an electrical connection member (e.g., flexible RF cable (FRC)).

According to various embodiments, the plurality of antenna elements 510, 520, 530 and 540 may include a first antenna element 510, a second antenna element 520, a third antenna element 530, and a fourth antenna element 540, which are disposed to be spaced apart at specified intervals. In one embodiment, the plurality of antenna elements 510, 520, 530 and 540 may be arranged in a row. In a certain embodiment, the plurality of antenna elements 510, 520, 530 and 540 may be arranged in a matrix form (e.g., 2x2 matrix form). In one embodiment, the plurality of antenna elements 510, 520, 530 and 540 may have substantially the same shape. In a certain embodiment, the antenna module 500 may include, but not limited to, an array antenna AR including four antenna elements 510, 520, 530 and 540. The antenna module 500 may include one antenna element, or it may include two, three, four, five or more antenna elements as an array antenna AR. In an embodiment, the antenna module 500 may also include a plurality of conductive patterns (e.g., dipole antennas) disposed on the substrate 590. In an embodiment, the substrate 590 may include a plurality of insulating layers (e.g., dielectric layers), and the plurality of conductive patterns (e.g., dipole antennas) which may be disposed on the same insulating layer as the antenna elements 510, 520, 530 and 540, or may be disposed on different insulating layers from the antenna elements 510, 520, 530 and 540. In an embodiment, the conductive patterns (e.g., dipole antennas) may be arranged in a region that does not overlap the antenna elements 510, 520, 530, 540, when viewed from above the first substrate surface 5901. In this case, the ground layer may be not disposed in the corresponding region of the substrate 590 where the plural conductive patterns are arranged. In an embodiment, the conductive patterns (e.g., dipole antennas) may be disposed inside the substrate 590, and the antenna elements 510, 520, 530, 540 may be exposed to an outer surface (e.g., first substrate surface 5901) of the substrate 590. In this case, the substrate 590 may be configured so that the direction of a directional signal formed through the conductive patterns is different from (e.g., perpendicular to) the direction of a directional signal formed by the array antenna AR. In one embodiment, the antenna module 500 may include at least one feeder or feeding portion disposed on each of the plural antenna elements 510, 520, 530 and 540. In one embodiment, the array antenna AR may be operated as a single polarization antenna or a dual polarization antenna through the at least one feeder.

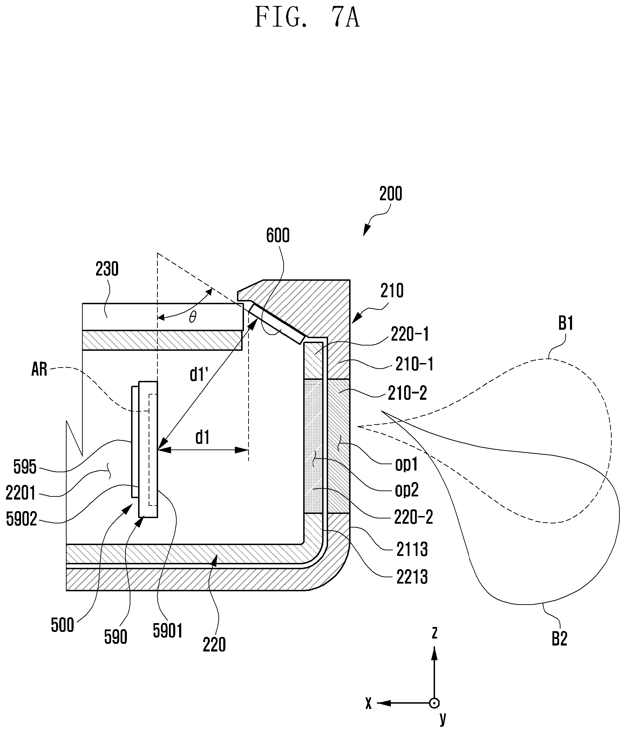

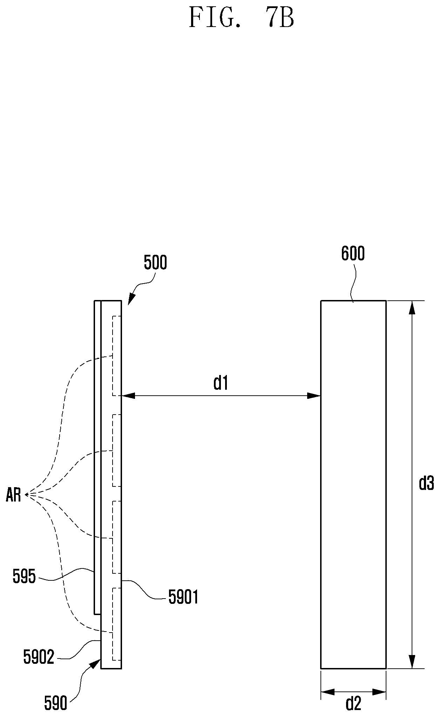

FIG. 7A is a partial cross-sectional view of the electronic device viewed along line 7a-7a in FIG. 2A according to various embodiments of the disclosure. FIG. 7B is a schematic view showing the arrangement relationship between the antenna module and the reflection sheet as viewed along the z-axis direction in FIG. 7A according to various embodiments of the disclosure.

In describing the electronic device 200 of FIGS. 7A and 7B, components that are substantially the same as those of the electronic device 200 of FIGS. 6A and 6B are assigned the same reference symbols, and detailed descriptions thereof may be omitted.

With reference to FIGS. 7A and 7B, the electronic device 200 may include a first housing 210 including a first space (e.g., first space 2101 in FIG. 6A), and a second housing 220 that is slidably coupled to the first housing 210 and includes a second space 2201. In one embodiment, the second housing 220 may be arranged to be slid out along a first direction (e.g., y-axis direction) or slid in along a second direction (e.g., negative y-axis direction) with respect to the first housing 210. In one embodiment, the first housing 210 may include a conductive portion 210-1 (e.g., metal or other conductive material), and a non-conductive portion 210-2 (e.g., polymer or other non-conductive material) coupled to the conductive portion 210-1. In one embodiment, the first housing 210 may include a first opening op1 as a non-conductive portion 210-2 formed in the conductive portion 210-1. In one embodiment, the first opening op1 may be filled with a non-conductive material, for example through insert injection. In one embodiment, the first opening op1 may be a single opening or may include multiple openings arranged side by side. In one embodiment, the second housing 220 may also include a conductive portion 220-1 (e.g., metal or other conductive material), and a non-conductive portion 220-2 (e.g., polymer or other non-conductive material) coupled to the conductive portion 220-1. In one embodiment, the second housing 220 may include a second opening op2 as a non-conductive portion 220-2 formed in the conductive portion 220-1. In one embodiment, the second opening op2 may be filled with a non-conductive material, for example through insert injection. In one embodiment, the second opening op2 may be a single opening or may include multiple openings arranged side by side. In one embodiment, the second opening op2 may be disposed at a position corresponding to the antenna elements AR(e.g., antenna elements 510, 520, 530 and 540 of FIG. 6C). For example, the second opening op2 may be disposed at a position that allows the beam pattern formed from the antenna elements AR to pass through to the outside of electronic device 200. In one embodiment, when the second opening op2 is includes multiple openings, these may be arranged to correspond respectively to the plurality of antenna elements AR. In one embodiment, the first opening op1 may positioned corresponding to or facing the second opening op2 when the electronic device 200 is in the slide-in state. In this case, the first opening op1 may also be disposed at a position corresponding to the antenna elements AR. For example, in the slide-in state, the first opening op1 may be disposed at a position overlapping with the second opening op2 so that the beam pattern formed from the antenna elements AR can pass through to the outside of the electronic device 200. In a certain embodiment, the second opening op2 may include a plurality of openings configured to correspond respectively to the plurality of antenna elements AR, and the first opening op1 may be one opening that corresponds to all of the plurality of openings of the second opening op2. In a certain embodiment, the first opening op1 may include a plurality of openings configured to correspond respectively to the plurality of antenna elements, and the second opening op2 may include one opening that corresponds to all of the plurality of openings of the first opening op1.

According to various embodiments, the electronic device 200 may include an antenna module 500 (e.g., first antenna module 500 in FIG. 6A) disposed in the second space 2201 of the second housing 220. In one embodiment, when the electronic device 200 is in the slide-in state, the directional signal formed by the antenna module 500 may be transmitted through the first opening op1 and the second opening op2 that are positioned to overlap each other to the outside of the electronic device. In this case, the substrate 590 of the antenna module 500 may be disposed so that the first substrate surface 5901 faces in a direction (e.g., -x axis direction) toward the first opening op1 and/or the second opening op2. For example, the substrate 590 of the antenna module 500 may be disposed so that the first substrate surface 5901 faces the sixth side surface 2213 of the second housing 220 in the slide-out state, and may be disposed so that the first substrate surface 5901 faces the sixth side surface 2213 and the third side surface 2113 in the slide-in state.

According to various embodiments, the electronic device 200 may include a reflection sheet 600 in the first space 2101 of the first housing 210 and is configured to change the direction of a directional signal formed by the antenna module 500. In one embodiment, the reflection sheet 600 may be disposed between the antenna module 500 and the second opening op2 in the slide-in state when the flexible display 230 is viewed from above (e.g., when viewed in negative z-axis direction). In one embodiment, in the slide-out state, the reflection sheet 600 may be disposed at a position that does not affect the beam pattern formed from antenna module 500. In a certain embodiment, in an intermediate state (where the second housing 220 is transitioning from the slide-in state to the slide-out state or from the slide-out state to the slide-in state), the reflection sheet 600 may be disposed at a position that at least partially affect the beam pattern formed from antenna 500. In one embodiment, to reduce radiation performance degradation of the antenna module 500 in the intermediate state described above, the first opening op1 may be formed to have a length that can continuously overlap with the second opening op2 during the transition from the slide-in state to the slide-out state. In one embodiment, the distance in the x-direction d1 between the antenna module 500 and the reflection sheet 600 may be set to be substantially equal to or longer than the length of at least a quarter of a wavelength (λ/4) with respect to the predetermined frequency band (e.g., operating frequency band) supported by the antenna module 500. In one embodiment, the antenna module 500 and the reflection sheet 600 may be offset by a vertical distance d1 along an line extending from the reflection sheet 600 to the first substrate surface 5901. In this case, the distance d1' between the antenna module 500 and the reflection sheet 600 may be the shortest distance between the antenna module 500 and the reflection sheet 600. In one embodiment, the reflection sheet 600 may have a rectangular shape and may have a width d2 of at least *λ*/4 with respect to the operating frequency band, and have a length d3 that is equal to or shorter than the length of the substrate. In one embodiment, the reflection sheet 600 may be inclined at an inclination angle of θ without blocking the second opening op2 and/or the first opening op1. Changing this angle (without changing the position of the reflection sheet 600) changes the angle/direction of reflection of the directional signals. This inclination angle θ may be chosen based on the configuration of the components within the electronic device, for example, it may be changed based on the shape of the first housing. The inclination angle θ may be the angle between the first substrate surface 5901 and the reflective surface of the reflection sheet 600. In one embodiment, the inclination angle θ may be in the range between 0 degrees and 90 degrees (0 degrees < θ < 90 degrees).

If there is no reflection sheet 600 present, a directional signal B1 formed by the antenna module 500 may be formed in the negative x-axis direction in the slide-in state through the second opening op2 and the first opening op1. In devices according to this disclosure, because the reflection sheet 600 is provided, a directional signal B2 formed by the antenna module 500 may be changed in a direction between the negative x-axis and the negative z-axis due to reflection of the directional signal from the reflection sheet 600. For example, the directional signal B2 may be tilted in a direction of the second rear cover (e.g., second rear cover 223 in FIG. 4). The second rear cover may be made of a dielectric material, which may reduce the signal loss of the antenna module 500 in the slide-in state, and thus the beam coverage can be improved.

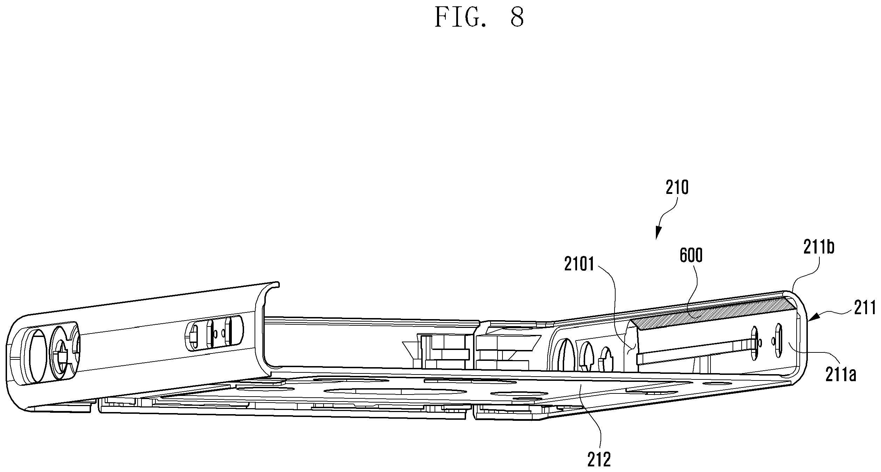

FIG. 8 is a perspective view of the first housing according to various embodiments of the disclosure.

With reference to FIG. 8, the first housing 210 may include a first lateral member 211, and a first extension member 212 extended from the first lateral member 211 to the first space 2101. In one embodiment, the first housing 210 may include a reflection sheet 600 disposed in the first space 2101. In one embodiment, the reflection sheet 600 may be disposed in the first space 2101 to be inclined at a specified angle (e.g., angle θ in FIG. 7A) with respect to the first substrate surface (e.g., first substrate surface 5901 in FIG. 7A) of the antenna module 500. In an embodiment, the reflection sheet 600 may be formed from a portion 211b of the inner surface 211a that is bent from the first lateral member 211 and protects the edge of the flexible display 230. In this case, the portion 211b of the inner surface may be a reflective surface (e.g., mirror surface processed or mirror finished) configured to improve reflection of a directional signal.

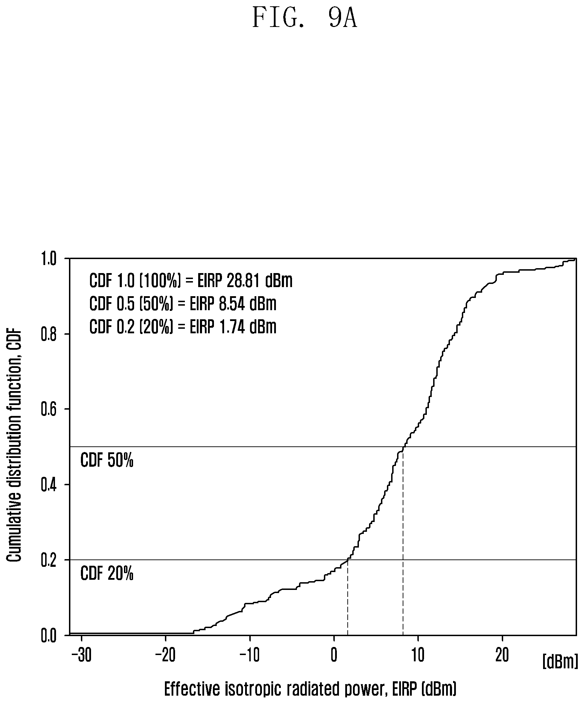

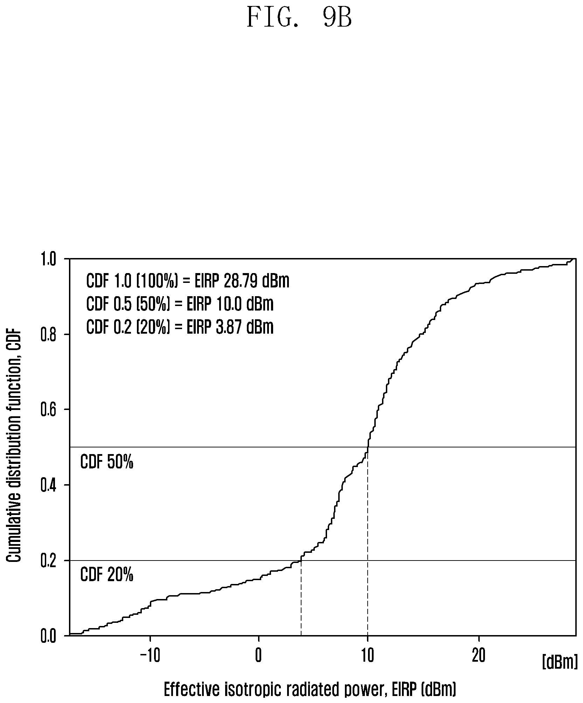

FIGS. 9A and 9B are graphs comparing antenna modules with and without a reflection sheet in terms of radiation performance.

With reference to FIG. 9A, a prior art device that includes an antenna module but no reflection sheet forms a directional signal which passes through openings of the first housing and the second housing that overlap each other in the slide-in state. This signal exhibits a gain of about 8.54 dBm at 50 percent cumulative distribution function (CDF) and about 1.74 dBm at 20 percent CDF (graph of FIG. 9A).. With reference to FIG. 9B, the antenna module 500 in which a reflection sheet 600 is present exhibits a gain of about 10.0 dBm at 50 percent CDF and about 3.87 dBm at 20 percent CDF (graph of FIG. 9B). From this, it can be seen that the radiation performance is improved by the use of a reflection sheet 600.

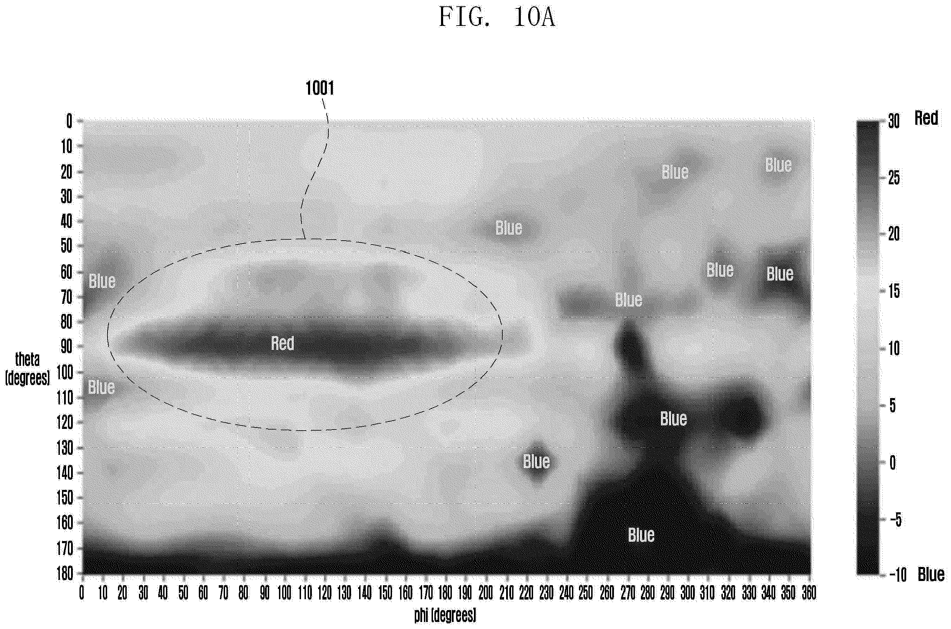

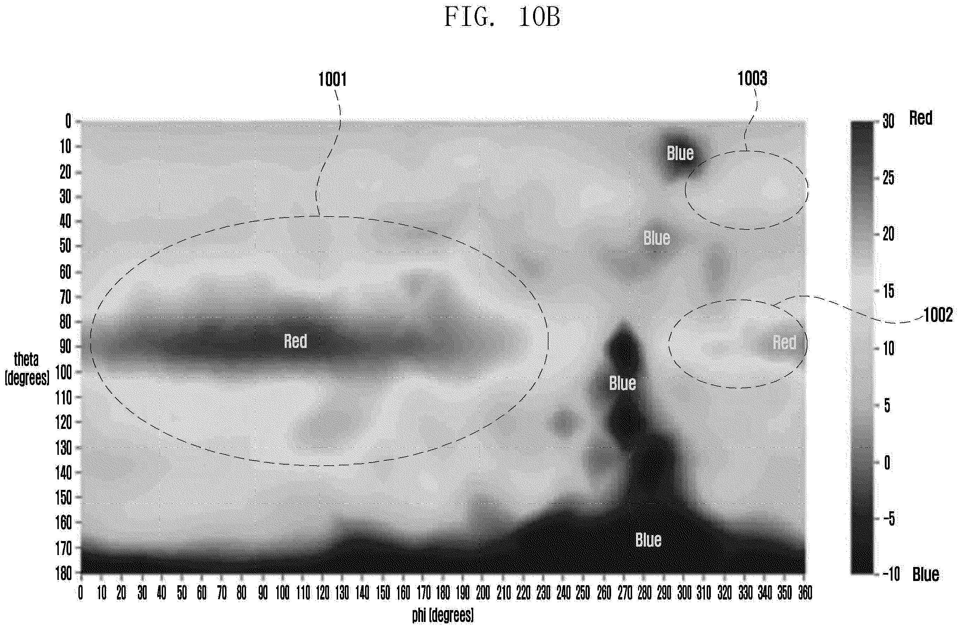

FIGS. 10A and 10B are graphs comparing antenna modules with and without a reflection sheet in terms of signal distribution.

With reference to FIG. 10A, when there is no reflection sheet and a directional signal is formed through the openings of the first housing and the second housing that overlap each other in the slide-in state, the signal is formed only near the region (region 1001) where the antenna module is disposed (graph of FIG. 10A). With reference to FIG. 10B, when the reflection sheet 600 is provided, it can be seen that the signal distribution extends not only near the region where the antenna module 500 is disposed (region 1001) but also to the surrounding regions (regions 1002 and 1003). This means that the reflection sheet 600 allows the beam coverage of the antenna module 500 to be expanded or secured by changing the direction of a directional signal formed by the antenna module 500, thereby improving radiation performance.

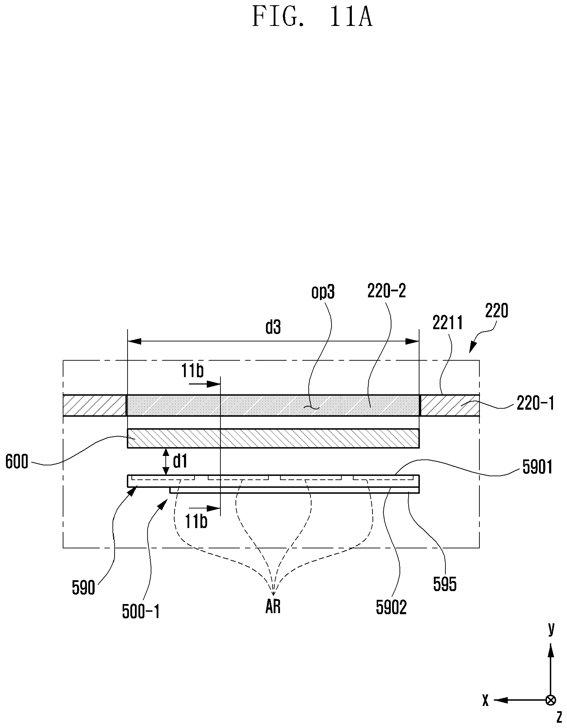

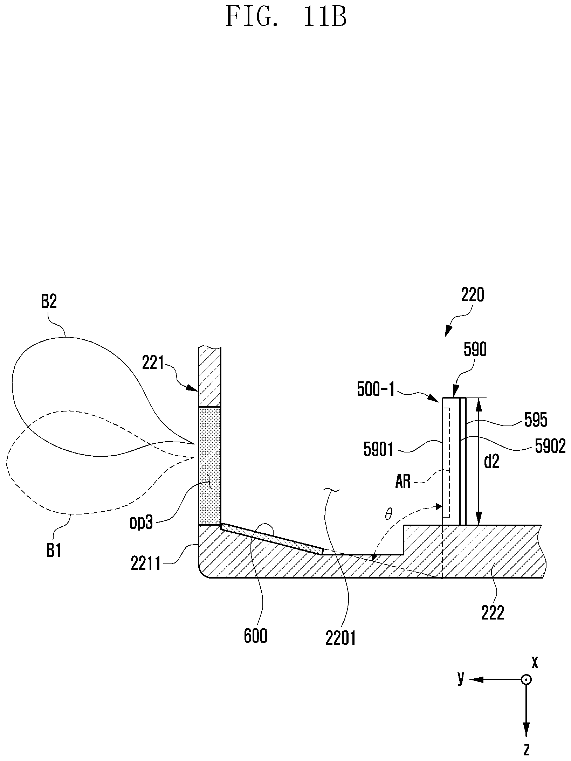

FIG. 11A is a view illustrating an arrangement structure of the second antenna module 500-1, as shown in a region 11a of FIG. 6B according to various embodiments of the disclosure. FIG. 11B is a cross-sectional view of the electronic device viewed along line 11b-11b in FIG. 11A according to various embodiments of the disclosure.

In describing the arrangement structure of the second antenna module 500-1 and the reflection sheet 600 in FIGS. 11A and 11B, components that are substantially the same as the arrangement structure of the antenna module 500 and the reflection sheet 600 in FIGS. 7A and 7B are assigned the same reference symbols, and detailed descriptions thereof may be omitted.

With reference to FIGS. 11A and 11B, the second antenna module 500-1 may be disposed in the second space 2201 of the second housing 220 so that a directional signal is formed in a direction in which the fourth side surface 2211 faces (e.g., y-axis direction). In this case, the directional signal formed by the second antenna module 500-1 may be formed toward the outside through a third opening op3, i.e., a non-conductive portion 220-2, formed in the conductive portion 220-1 of the second housing 220. In one embodiment, the third opening op3 may be filled with a non-conductive material (e.g., polymer). In one embodiment, the electronic device 200 may include a reflection sheet 600 disposed between the second antenna module 500-1 and the third opening op3. The shape of the reflection sheet 600 and its arrangement relationship with respect to the second antenna module 500-1 may be substantially the same as the arrangement of the reflection sheet 600 in FIGS. 7A and 7B.

According to various embodiments, the radiation direction of a directional signal B2 formed by the second antenna module 500-1 may be tilted by its reflection off the reflection sheet 600 in or towards a direction in which the second rear cover (e.g., second rear cover 223 in FIG. 4) faces (e.g., negative z-axis direction or direction between the y-axis and negative z-axis), which improves the beam coverage. This arrangement structure of the second antenna module 500-1 and the reflection sheet 600 may be applied to general bar-type or tablet-type electronic devices other than a rollable electronic device.

According to various embodiments, an electronic device (e.g., electronic device 200 of FIG. 7A) may include: a first housing (e.g., first housing 210 in FIG. 7A) including a first space (e.g., first space 2101 in FIG. 4) and a first non-conductive portion (e.g., non-conductive portion 210-2 in FIG. 7A); a second housing (e.g., second housing 220 in FIG. 7A) that is movably coupled to the first housing, is at least partially slid into the first space in a first state, and includes a second non-conductive portion (e.g., non-conductive portion 220-2 in FIG. 7A); a first antenna module (e.g., antenna module 500 in FIG. 7A) that is disposed in a second space (e.g., second space 2201 in FIG. 7A) of the second housing, and forms a first directional signal through the second non-conductive portion in a second state in which the second housing is slid out from the first space; and a first reflection sheet (e.g., reflection sheet 600 in FIG. 7A) disposed in the first housing, wherein the first antenna module may be configured to form a first directional signal toward the outside of the electronic device through the second non-conductive portion and the first non-conductive portion in the first state, and change the direction of the first directional signal through the first reflection sheet.

According to various embodiments, the first reflection sheet may include a metal sheet attached to the inner surface of the first housing.

According to various embodiments, the first reflection sheet may include a reflective surface formed on the inner surface of the first housing.

According to various embodiments, the first non-conductive portion and the second non-conductive portion may be disposed at positions that overlap each other in the first state.

According to various embodiments, the first antenna module may be arranged to form the first directional signal toward the outside of the electronic device through the first non-conductive portion and the second non-conductive portion in the first state.

According to various embodiments, the first antenna module may be arranged to form the first directional signal toward the outside of the electronic device through the second non-conductive portion in the second state.

According to various embodiments, the first reflection sheet may be disposed at a position that does not overlap the first non-conductive portion when viewed from the front of the electronic device.

According to various embodiments, the first reflection sheet may be disposed at a position that does not overlap the antenna module in the first state when the first non-conductive portion is viewed from the outside in a vertical direction.

According to various embodiments, the first reflection sheet may be disposed to have a separation distance of λ/4 from at least the antenna module with respect to the operating frequency band.

According to various embodiments, the first reflection sheet may be formed in a rectangular shape, and may be formed to have a length (e.g., length d3 in FIG. 7B) that is equal to or shorter than the length of the antenna module and have a width greater than λ/4 (e.g., width d2 in FIG. 7B) with respect to the operating frequency band.

According to various embodiments, the first reflection sheet may be disposed to be inclined so that the angle between the radiation surface 5901 of the antenna module and the reflective surface of the first reflection sheet (e.g., angle θ in FIG. 7A) is in the range between 0 degrees and 90 degrees (0 degrees < θ < 90 degrees).

According to various embodiments, the first antenna module may include: a substrate (e.g., substrate 590 in FIG. 7A) including a first substrate surface (e.g., first substrate surface 5901 in FIG. 7A) and a second substrate surface (e.g., second substrate surface 5902 in FIG. 7A) facing in a direction opposite to the first substrate surface; and a plurality of antenna elements (e.g., antenna elements AR in FIG. 7A) disposed on the first substrate surface of the substrate or close to the first substrate surface in the space between the first substrate surface and the second substrate surface, wherein the first directional signal may be formed in a direction in which the first substrate surface faces through the plurality of antenna elements.

According to various embodiments, the first antenna module may be disposed in such a way that the first substrate surface faces the second non-conductive portion.

According to various embodiments, the first housing may include a first lateral member (e.g., first lateral member 211 in FIG. 4) constituting a side surface of the electronic device, and the second housing may include a second lateral member (e.g., second lateral member 221 in FIG. 7A) constituting a side surface of the electronic device.

According to various embodiments, the first non-conductive portion may include at least one first opening (e.g., first opening op1 in FIG. 7A) formed in a portion of the first lateral member made of a conductive member, and the second non-conductive portion may include at least one second opening (e.g., second opening op2 in FIG. 7A) formed in a portion of the second lateral member made of a conductive member, wherein the first opening and the second opening may be positioned to overlap each other in the first state.

According to various embodiments, the first opening and the second opening may be filled with a non-conductive member.

According to various embodiments, the electronic device may include a second antenna module (e.g., antenna module 500-1 in FIG. 11A) that is disposed in the second space and arranged to form a second directional signal through a third non-conductive portion included in the second housing, and a second reflection sheet (e.g., reflection sheet 600 in FIG. 11A) disposed in the second space between the second antenna module and the second housing.

According to various embodiments, the second antenna module may be arranged to form the second directional signal toward the outside of the electronic device through the third non-conductive portion in the first state.

According to various embodiments, the electronic device may include a bendable support member (e.g., support member 240 in FIG. 4) connected to the second housing, and a flexible display (e.g., flexible display 230 in FIG. 7A) that is configured to be supported by the second housing and the support member and is at least partially accommodated in the first space in the first state.

According to various embodiments, the first antenna module may be configured to transmit or receive the first directional signal and the second directional signal in a frequency band ranging from 3 GHz to 300 GHz.

Meanwhile, the embodiments of the disclosure disclosed in this specification and drawings are presented merely as specific examples to help explain the technical content of the embodiments of the disclosure and to aid understanding of the embodiments of the disclosure.

## Claims

1. An electronic device comprising:
a first housing (210) including a first space (2101) and a first non-conductive portion (210-2);
a second housing (220) that is movably coupled to the first housing, is at least partially slide into the first space in a first state, and includes a second non-conductive portion (220-2);
a first antenna module (500) that is disposed in a second space (2201) of the second housing, and forms a first directional signal through the second non-conductive portion in a second state in which the second housing is at least partially slide out from the first space; and
a first reflection sheet (600) disposed in the first housing,
wherein the first antenna module is configured to:
form the first directional signal toward an outside of the electronic device through the second non-conductive portion and the first non-conductive portion in the first state, and
cause a change a direction of the first directional signal through reflection of the first directional signal from the first reflection sheet in the first state.

2. The electronic device of claim 1, wherein the first reflection sheet includes a metal sheet attached to an inner surface of the first housing.

3. The electronic device of claim 1 or 2, wherein the first reflection sheet includes a reflective surface formed on the inner surface of the first housing.

4. The electronic device of any one of claims 1 to 3, wherein the first non-conductive portion and the second non-conductive portion are disposed at positions that overlap each other in the first state.

5. The electronic device of any one of claims 1 to 4, wherein the first antenna module is arranged to form the first directional signal toward the outside of the electronic device through the first non-conductive portion and the second non-conductive portion in the first state.

6. The electronic device of any one of claims 1 to 5, wherein the first antenna module is arranged to form the first directional signal toward the outside of the electronic device through the second non-conductive portion in the second state.

7. The electronic device of any one of claims 1 to 6, wherein the first reflection sheet is disposed at a position that does not overlap the first non-conductive portion when viewed from a front of the electronic device.

8. The electronic device of any one of claims 1 to 7, wherein the first reflection sheet is disposed at a position that does not overlap the antenna module in the first state when the first non-conductive portion is viewed from the outside in a vertical direction.

9. The electronic device of any one of claims 1 to 8, wherein the first reflection sheet is disposed to have a separation distance of λ/4 from at least the antenna module with respect to an operating frequency band.

10. The electronic device of any one of claims 1 to 9, wherein the first reflection sheet is formed in a rectangular shape, and is formed to have a length (d3) that is equal to or shorter than a length of the antenna module and have a width (d2) greater than λ/4 with respect to the operating frequency band.

11. The electronic device of any one of claims 1 to 10, wherein the first reflection sheet is disposed to be inclined in a manner that an angle (θ) between a radiation surface (5901) of the antenna module and a reflective surface of the first reflection sheet is in a range between 0 degrees and 90 degrees (0 degrees <θ < 90 degrees).

12. The electronic device of any one of claims 1 to 11, wherein:
the first antenna module includes a substrate (590) including a first substrate surface (5901) and a second substrate surface (5902) facing in a direction opposite to the first substrate surface, and a plurality of antenna elements (AR) disposed on the first substrate surface of the substrate or close to the first substrate surface in a space between the first substrate surface and the second substrate surface; and
the first directional signal is formed in a direction in which the first substrate surface faces through the plurality of antenna elements.

13. The electronic device of claim 12, wherein the first antenna module is disposed in a manner that the first substrate surface faces the second non-conductive portion.

14. The electronic device of claim 12 or 13, wherein:
the first housing includes a first lateral member (211) constituting a side surface of the electronic device; and
the second housing includes a second lateral member (221) constituting a side surface of the electronic device.

15. The electronic device of claim 14, wherein:
the first non-conductive portion includes at least one first opening (op1) formed in a portion of the first lateral member made of a conductive member;
the second non-conductive portion includes at least one second opening (op2) formed in a portion of the second lateral member made of a conductive member; and
the first opening and the second opening are positioned to overlap each other in the first state.

## Patentansprüche

1. Elektronische Vorrichtung, umfassend:
ein erstes Gehäuse (210) mit einem ersten Raum (2101) und einem ersten nicht leitenden Abschnitt (210-2);
ein zweites Gehäuse (220), das bewegbar an das erste Gehäuse gekoppelt ist, in einem ersten Zustand mindestens teilweise in den ersten Raum gleitet und einen zweiten nicht leitenden Abschnitt (220-2) beinhaltet;
ein erstes Antennenmodul (500), das in einem zweiten Raum (2201) des zweiten Gehäuses angeordnet ist und in einem zweiten Zustand, in dem das zweite Gehäuse mindestens teilweise aus dem ersten Raum herausgleitet, ein erstes Richtungssignal durch den zweiten nicht leitenden Abschnitt bildet; und
eine erste Reflexionsfolie (600), die in dem ersten Gehäuse angeordnet ist,
wobei das erste Antennenmodul konfiguriert ist zum:
Bilden des ersten Richtungssignals hin zu einer Außenseite der elektronischen Vorrichtung durch den zweiten nicht leitenden Abschnitt und den ersten nicht leitenden Abschnitt in dem ersten Zustand und
Bewirken einer Änderung einer Richtung des ersten Richtungssignals durch Reflexion des ersten Richtungssignals von der ersten Reflexionsfolie in dem ersten Zustand.

2. Elektronische Vorrichtung nach Anspruch 1, wobei die erste Reflexionsfolie eine Metallfolie beinhaltet, die an einer Innenfläche des ersten Gehäuses angebracht ist.

3. Elektronische Vorrichtung nach Anspruch 1 oder 2, wobei die erste Reflexionsfolie eine Reflexionsfläche beinhaltet, die auf der Innenfläche des ersten Gehäuses gebildet ist.

4. Elektronische Vorrichtung nach einem der Ansprüche 1 bis 3, wobei der erste nicht leitende Abschnitt und der zweite nicht leitende Abschnitt an Positionen angeordnet sind, die einander in dem ersten Zustand überlappen.

5. Elektronische Vorrichtung nach einem der Ansprüche 1 bis 4, wobei das erste Antennenmodul angeordnet ist, um das erste Richtungssignal hin zu der Außenseite der elektronischen Vorrichtung durch den ersten nicht leitenden Abschnitt und den zweiten nicht leitenden Abschnitt in dem ersten Zustand zu bilden.

6. Elektronische Vorrichtung nach einem der Ansprüche 1 bis 5, wobei das erste Antennenmodul angeordnet ist, um das erste Richtungssignal hin zu der Außenseite der elektronischen Vorrichtung durch den zweiten nicht leitenden Abschnitt in dem zweiten Zustand zu bilden.

7. Elektronische Vorrichtung nach einem der Ansprüche 1 bis 6, wobei die erste Reflexionsschicht an einer Position angeordnet ist, die den ersten nicht leitenden Abschnitt nicht überlappt, wenn von einer Vorderseite der elektronischen Vorrichtung betrachtet.

8. Elektronische Vorrichtung nach einem der Ansprüche 1 bis 7, wobei die erste Reflexionsfolie an einer Position angeordnet ist, die das Antennenmodul in dem ersten Zustand nicht überlappt, wenn der erste nicht leitende Abschnitt von außen in einer vertikalen Richtung betrachtet wird.

9. Elektronische Vorrichtung nach einem der Ansprüche 1 bis 8, wobei die erste Reflexionsschicht so angeordnet ist, dass sie einen Trennungsabstand von λ/4 von mindestens dem Antennenmodul in Bezug auf ein Betriebsfrequenzband aufweist.

10. Elektronische Vorrichtung nach einem der Ansprüche 1 bis 9, wobei die erste Reflexionsfolie in einer rechteckigen Form gebildet ist und so gebildet ist, dass sie eine Länge (d3) aufweist, die gleich oder kürzer als eine Länge des Antennenmoduls ist, und eine Breite (d2) von größer als λ/4 in Bezug auf das Betriebsfrequenzband aufweist.

11. Elektronische Vorrichtung nach einem der Ansprüche 1 bis 10, wobei die erste Reflexionsfolie so angeordnet ist, dass sie in einer Weise geneigt ist, dass ein Winkel (θ) zwischen einer Abstrahlungsfläche (5901) des Antennenmoduls und einer Reflexionsfläche der ersten Reflexionsfolie in einem Bereich zwischen 0 Grad und 90 Grad (0 Grad < θ < 90 Grad) liegt.

12. Elektronische Vorrichtung nach einem der Ansprüche 1 bis 11, wobei:
das erste Antennenmodul ein Substrat (590) mit einer ersten Substratfläche (5901) und einer zweiten Substratfläche (5902), die in eine Richtung entgegen der ersten Substratfläche weist, und eine Vielzahl von Antennenelementen (AR) beinhaltet, die auf der ersten Substratfläche des Substrats oder nahe der ersten Substratfläche in einem Raum zwischen der ersten Substratfläche und der zweiten Substratfläche angeordnet sind; und
das erste Richtungssignal in einer Richtung gebildet wird, in der die erste Substratfläche durch die Vielzahl von Antennenelementen weist.

13. Elektronische Vorrichtung nach Anspruch 12, wobei das erste Antennenmodul derart angeordnet ist, dass die erste Substratfläche dem zweiten nicht leitenden Abschnitt zugewandt ist.

14. Elektronische Vorrichtung nach Anspruch 12 oder 13, wobei:
das erste Gehäuse ein erstes laterales Element (211), das eine Seitenfläche der elektronischen Vorrichtung darstellt, beinhaltet; und
das zweite Gehäuse ein zweites laterales Element (221), das eine Seitenfläche der elektronischen Vorrichtung darstellt, beinhaltet.

15. Elektronische Vorrichtung nach Anspruch 14, wobei:
der erste nicht leitende Abschnitt mindestens eine erste Öffnung (op1) beinhaltet, die in einem Abschnitt des ersten lateralen Elements, der aus einem leitenden Element hergestellt ist, gebildet ist;
der zweite nicht leitende Abschnitt mindestens eine zweite Öffnung (op2) beinhaltet, die in einem Abschnitt des zweiten lateralen Elements, der aus einem leitenden Element hergestellt ist, gebildet ist; und
wobei die erste Öffnung und die zweite Öffnung so positioniert sind, dass sie einander in dem ersten Zustand überlappen.

## Revendications

1. Dispositif électronique comprenant :
un premier boîtier (210) comprenant un premier espace (2101) et une première partie non conductrice (210-2) ;
un second boîtier (220) qui est couplé de manière mobile au premier boîtier, est au moins partiellement coulissant dans le premier espace dans un premier état, et comprend une seconde partie non conductrice (220-2) ;
un premier module d'antenne (500) qui est disposé dans un second espace (2201) du second boîtier, et forme un premier signal directionnel à travers la seconde partie non conductrice dans un second état dans lequel le second boîtier est au moins partiellement coulissant hors du premier espace ; et
une première feuille de réflexion (600) disposée dans le premier boîtier,
dans lequel le premier module d'antenne est configuré pour :
former le premier signal directionnel vers l'extérieur du dispositif électronique à travers la seconde partie non conductrice et la première partie non conductrice dans le premier état, et
provoquer un changement de direction du premier signal directionnel par réflexion du premier signal directionnel à partir de la première feuille de réflexion dans le premier état.

2. Dispositif électronique selon la revendication 1, dans lequel la première feuille de réflexion comprend une feuille métallique fixée à une surface interne du premier boîtier.

3. Dispositif électronique selon la revendication 1 ou 2, dans lequel la première feuille de réflexion comprend une surface réfléchissante formée sur la surface interne du premier boîtier.

4. Dispositif électronique selon l'une quelconque des revendications 1 à 3, dans lequel la première partie non conductrice et la seconde partie non conductrice sont disposées à des positions qui se chevauchent l'une l'autre dans le premier état.

5. Dispositif électronique selon l'une quelconque des revendications 1 à 4, dans lequel le premier module d'antenne est agencé pour former le premier signal directionnel vers l'extérieur du dispositif électronique à travers la première partie non conductrice et la seconde partie non conductrice dans le premier état.

6. Dispositif électronique selon l'une quelconque des revendications 1 à 5, dans lequel le premier module d'antenne est agencé pour former le premier signal directionnel vers l'extérieur du dispositif électronique à travers la seconde partie non conductrice dans le second état.

7. Dispositif électronique selon l'une quelconque des revendications 1 à 6, dans lequel la première feuille de réflexion est disposée à une position qui ne chevauche pas la première partie non conductrice lorsqu'elle est vue de l'avant du dispositif électronique.

8. Dispositif électronique selon l'une quelconque des revendications 1 à 7, dans lequel la première feuille de réflexion est disposée à une position qui ne chevauche pas le module d'antenne dans le premier état lorsque la première partie non conductrice est vue de l'extérieur dans une direction verticale.

9. Dispositif électronique selon l'une quelconque des revendications 1 à 8, dans lequel la première feuille de réflexion est disposée pour présenter une distance de séparation de λ/4 à partir d'au moins le module d'antenne par rapport à une bande de fréquence de fonctionnement.

10. Dispositif électronique selon l'une quelconque des revendications 1 à 9, dans lequel la première feuille de réflexion est formée dans une forme rectangulaire, et est formée pour présenter une longueur (d3) qui est égale ou inférieure à une longueur du module d'antenne et présenter une largeur (d2) supérieure à λ/4 par rapport à la bande de fréquence de fonctionnement.

11. Dispositif électronique selon l'une quelconque des revendications 1 à 10, dans lequel la première feuille de réflexion est disposée pour être inclinée d'une manière telle qu'un angle (θ) entre une surface de rayonnement (5901) du module d'antenne et une surface réfléchissante de la première feuille de réflexion se situe dans une plage entre 0 degré et 90 degrés (0 degré < θ < 90 degrés).

12. Dispositif électronique selon l'une quelconque des revendications 1 à 11, dans lequel :
le premier module d'antenne comprend un substrat (590) comprenant une première surface de substrat (5901) et une seconde surface de substrat (5902) orientée dans une direction opposée à la première surface de substrat, et une pluralité d'éléments d'antenne (AR) disposés sur la première surface de substrat du substrat ou à proximité de la première surface de substrat dans un espace entre la première surface de substrat et la seconde surface de substrat ; et
le premier signal directionnel est formé dans une direction dans laquelle est orientée la première surface du substrat via la pluralité d'éléments d'antenne.

13. Dispositif électronique selon la revendication 12, dans lequel le premier module d'antenne est disposé de manière à ce que la première surface de substrat soit orientée vers la seconde partie non conductrice.

14. Dispositif électronique selon la revendication 12 ou 13, dans lequel :
le premier boîtier comprend un premier élément latéral (211) constituant une surface latérale du dispositif électronique ; et
le second boîtier comprend un second élément latéral (221) constituant une surface latérale du dispositif électronique.

15. Dispositif électronique selon la revendication 14, dans lequel :
la première partie non conductrice comprend au moins une première ouverture (op1) formée dans une partie du premier élément latéral constituée d'un élément conducteur ;
la seconde partie non conductrice comprend au moins une seconde ouverture (op2) formée dans une partie du second élément latéral constituée d'un élément conducteur ; et
la première ouverture et la seconde ouverture sont positionnées pour se chevaucher l'une l'autre dans le premier état.
